(19) Europäisches Patentamt
European Patent Office
Office européen des brevets

(11) **EP 4 757 391 A1**

(12) **EUROPEAN PATENT APPLICATION**
published in accordance with Art. 153(4) EPC

(43) Date of publication:
**10.06.2026 Bulletin 2026/24**

(21) Application number: **23951118.1**

(22) Date of filing: **05.09.2023**

(51) International Patent Classification (IPC):
**H04W 24/06** (2009.01)

(52) Cooperative Patent Classification (CPC):
**H04W 24/06**

(86) International application number:
**PCT/CN2023/117032**

(87) International publication number:
**WO 2025/050289 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen, Guangdong 518129 (CN)**

(72) Inventors:
• **ZHANG, Gongzheng
Shenzhen, Guangdong 518129 (CN)**

• **XU, Chen
Shenzhen, Guangdong 518129 (CN)**
• **WANG, Jian
Shenzhen, Guangdong 518129 (CN)**
• **LI, Rong
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND RELATED DEVICE**

(57) This application provides a communication method and a related device. In the method, a first communication apparatus determines first data, where the first data is data obtained after first processing is performed on second data, and the second data is preconfigured; and the first communication apparatus sends the first data. A receiver of the first data can determine the second data in a preconfigured manner, so that the receiver can perform second processing corresponding to the first processing based on the received first data to obtain an estimate of the second data, and optimize a data processing process in wireless communication based on the estimate of the second data and the preconfigured second data, so as to improve communication efficiency.

FIG. 2

Description

## TECHNICAL FIELD

This application relates to the field of wireless communication, and in particular, to a communication method and a related device.

## BACKGROUND

Wireless communication may be communication through transmission between two or more communication nodes without using a conductor or a cable. The communication node usually includes a network device and a terminal device.

Currently, in a wireless communication system, a communication node serving as a signal sender may perform a plurality of processing processes, including channel encoding, modulation, and the like, on to-be-sent raw data; and correspondingly, a communication node serving as a signal receiver may perform other processing processes corresponding to the plurality of processing processes, including channel decoding, demodulation, and the like, on a received signal, to restore the raw data (or obtain an estimate of the raw data). These processing processes can improve data transmission reliability.

However, in the wireless communication system, how to improve data processing efficiency is a technical problem to be resolved urgently.

## SUMMARY

This application provides a communication method and a related device, to optimize a data processing process in wireless communication, so as to improve communication efficiency.

A first aspect of this application provides a communication method. The method is performed by a first communication apparatus, or the method is performed by some components (such as a processor, a chip, or a chip system) in a first communication apparatus, or the method may be implemented by a logic module or software that can implement all or some functions of a first communication apparatus. In the first aspect and a possible implementation thereof, an example in which the communication method is performed by a first communication apparatus is used for description. The first communication apparatus may be a terminal device or a network device. In the method, the first communication apparatus determines first data, where the first data is data obtained after first processing is performed on second data, and the second data is preconfigured; and the first communication apparatus sends the first data.

According to the foregoing technical solution, the first data sent by the first communication apparatus is the data obtained after the first processing is performed on the second data, and the second data is preconfigured. In other words, a receiver (for example, a second communication apparatus) of the first data can determine the second data in a preconfigured manner, so that the receiver can perform second processing corresponding to the first processing based on the received first data to obtain an estimate of the second data, and optimize a data processing process in wireless communication based on the estimate of the second data and the preconfigured second data, so as to improve communication efficiency.

In a possible implementation of the first aspect, the second data includes a virtual encoded bit.

It should be understood that, in a conventional data transmission process, raw data transmitted by a sender needs to undergo information conversion to obtain an information bit (for example, a binary information bit), and then the information bit sequentially undergoes one or more of encoding, rate matching, scrambling, modulation, layer mapping, precoding, resource element (resource element, RE) mapping, digital beamforming (beamforming, BF), waveform generation, digital-to-analog conversion, and analog BF. Correspondingly, after receiving data, a receiver needs to perform analog BF, analog-to-digital conversion, waveform reception, digital BF, RE demapping, channel equalization, layer demapping, demodulation, descrambling, de-rate matching, decoding, and the like to obtain an information bit, and then perform information conversion on the information bit to obtain raw data (or an estimate of raw data).

Optionally, waveforms in waveform generation and waveform reception may include one or more of orthogonal frequency division multiplexing (orthogonal frequency division multiplexing, OFDM) waveforms based on inverse fast Fourier transform (inverse fast Fourier transform, IFFT), discrete Fourier transform-spread-orthogonal frequency division multiplexing (discrete Fourier transform-spread-orthogonal frequency division multiplexing, DFT-s-OFDM) waveforms based on fast Fourier transform (fast Fourier transform, FFT) and IFFT, or frequency domain spectrum shaping (frequency domain spectrum shaping, FDSS) waveforms.

It should be noted that the virtual encoded bit may be a bit obtained after encoding, that is, the virtual encoded bit is a bit to undergo another processing process after encoding in the foregoing one or more sending processing processes (for example, a to-be-modulated bit). In other words, the virtual encoded bit may be a bit that does not undergo (or does not need to undergo) encoding, where the virtual encoded bit may be referred to as a pseudo-encoded bit.

According to the foregoing technical solution, the first data is data obtained after the first processing is performed on the second data, and the second data includes the virtual encoded bit. The virtual encoded bit does not need to undergo encoding and related processing (for example, processing that may exist before encoding, including information conversion), that is, the first processing may exclude encoding and related processing. Therefore, the first communication apparatus can omit or skip encoding and related processing by using the preconfigured virtual encoded bit, thereby reducing processing complexity and delay for the sender. In addition, by using the preconfigured virtual encoded bit, after the receiver (for example, the second communication apparatus) of the first data receives the first data, the receiver can also omit or skip decoding corresponding to the encoding when performing the second processing corresponding to the first processing on the first data, thereby reducing processing complexity and delay for the receiver.

Optionally, a bit number of the virtual encoded bit is associated with at least one of a configured resource element (resource element, RE) number, a configured modulation order, and a configured stream number.

Optionally, the virtual encoded bit is generated based on a first sequence, where the first sequence is a configured sequence; or the first sequence is a sequence determined based on a frame number of a configured time-domain resource and/or a configured stream number; or the first sequence is determined based on information about at least one of a configured time-domain resource, a configured frequency-domain resource, and a configured spatial-domain resource.

In a possible implementation of the first aspect, the second data includes a virtual information bit.

It should be noted that the virtual information bit may be a bit obtained after information conversion, that is, the virtual information bit is a bit to undergo the foregoing one or more sending processing processes (for example, a to-be-encoded bit). In other words, the virtual information bit may be a bit that does not undergo (or does not need to undergo) information conversion, where the virtual information bit may be referred to as a pseudo-information bit.

According to the foregoing technical solution, the first data is data obtained after the first processing is performed on the second data, and the second data includes the virtual information bit. The virtual information bit does not need to undergo information conversion, that is, the first processing may exclude information conversion. Therefore, the first communication apparatus can omit or skip information conversion by using the preconfigured virtual information bit, thereby reducing processing complexity and delay for the sender. In addition, by using the preconfigured virtual information bit, after the receiver (for example, the second communication apparatus) of the first data receives the first data, the receiver can also omit or skip inverse processing corresponding to the information conversion when performing the second processing corresponding to the first processing on the first data, thereby reducing processing complexity and delay for the receiver.

In a possible implementation of the first aspect, the second data includes a virtual modulated symbol.

It should be noted that the virtual modulated symbol may be a signal obtained after modulation, that is, the virtual modulated symbol is a signal to undergo another processing process after modulation in the foregoing one or more sending processing processes (for example, a signal on which RE mapping is to be performed). In other words, the virtual modulated symbol may be a symbol that does not undergo (or does not need to undergo) modulation, where the virtual modulated symbol may be referred to as a pseudo-modulated symbol.

According to the foregoing technical solution, the first data is data obtained after the first processing is performed on the second data, and the second data includes the virtual modulated symbol. The virtual modulated symbol does not need to undergo modulation and related processing (for example, processing that may exist before modulation, including encoding), that is, the first processing may exclude modulation and related processing. Therefore, the first communication apparatus can omit or skip modulation and related processing by using the preconfigured virtual modulated symbol, thereby reducing processing complexity and delay for the sender. In addition, by using the preconfigured virtual modulated symbol, after the receiver (for example, the second communication apparatus) of the first data receives the first data, the receiver can also omit or skip demodulation corresponding to the modulation when performing the second processing corresponding to the first processing on the first data, thereby reducing processing complexity and delay for the receiver.

Optionally, a number of virtual modulated symbols is associated with at least one of a configured RE number and a configured stream number.

Optionally, the virtual modulated symbol is a symbol determined based on a preset symbol sequence or a random sequence.

In a possible implementation of the first aspect, the second data includes a virtual sent signal.

It should be noted that the virtual sent signal may be a signal sent after waveform generation, that is, the virtual sent signal is a signal to undergo another processing process after waveform generation in the foregoing one or more sending processing processes (for example, a signal on which carrier modulation is to be performed). In other words, the virtual sent signal may be a signal that does not undergo (or does not need to undergo) waveform generation, where the virtual sent signal may be referred to as a pseudo-sent signal.

According to the foregoing technical solution, the first data is data obtained after the first processing is performed on the second data, and the second data includes the virtual sent signal. The virtual sent signal does not need to undergo waveform generation and related processing (for example, processing that may exist before waveform generation, including encoding, modulation, and the like), that is, the first processing may exclude waveform generation and related processing. Therefore, the first communication apparatus can omit or skip waveform generation and related processing by using the preconfigured virtual sent signal, thereby reducing processing complexity and delay for the sender. In addition, by using the preconfigured virtual sent signal, after the receiver (for example, the second communication apparatus) of the first data receives the first data, the receiver can also omit or skip waveform reception corresponding to the waveform generation when performing the second processing corresponding to the first processing on the first data, thereby reducing processing complexity and delay for the receiver.

Optionally, the sent signal is a random signal sequence, a preconfigured signal sequence, a constant-power signal, or a random signal.

In a possible implementation of the first aspect, the first data and the second data are used for a first neural network, and the first neural network is associated with the first processing.

According to the foregoing technical solution, the first data sent by the first communication apparatus and the preconfigured second data may be used for the first neural network, and the first neural network is associated with the first processing. In other words, the receiver (for example, the second communication apparatus) of the first data can perform the second processing corresponding to the first processing based on the received first data to obtain an estimate of the second data, and optimize the first neural network based on the estimate of the second data and the preconfigured second data.

It should be understood that a process of optimizing the first neural network may include one or more of training the first neural network, evaluating the first neural network, testing the first neural network, validating the first neural network, calibrating the first neural network, or the like.

In a possible implementation of the first aspect, the first neural network includes a neural network deployed in a first communication apparatus; and that the first neural network is associated with the first processing includes: The neural network deployed in the first communication apparatus is used for the first processing, and the first processing includes at least one of the following: encoding, rate matching, scrambling, modulation, layer mapping, precoding, resource element RE mapping, digital beamforming BF, waveform generation, digital-to-analog conversion, and analog BF.

Optionally, when the first processing does not include some processing of the at least one of the foregoing processing, the some processing may be omitted or skipped, thereby reducing processing complexity and delay.

According to the foregoing technical solution, in a conventional signal transmitter, the first processing may be performed by a corresponding component. For example, encoding included in the first processing may be implemented by an encoder, and modulation included in the first processing may be implemented by a modulator. In the foregoing technical solution, at least one processing included in the first processing may be implemented by a neural network. The first neural network may include a neural network deployed in the first communication apparatus, and the neural network deployed in the first communication apparatus is used for the first processing. In other words, the receiver of the first data can perform the second processing corresponding to the first processing based on the received first data to obtain an estimate of the second data, and optimize, based on the estimate of the second data and the preconfigured second data, the neural network deployed in the first communication apparatus, to optimize a transmitter implemented based on the neural network.

In a possible implementation of the first aspect, the method further includes: The first communication apparatus receives indication information indicating a gradient of the first neural network.

According to the foregoing technical solution, the receiver of the first data can send, based on the estimate of the second data and the preconfigured second data, the indication information indicating the gradient of the first neural network, so that the first communication apparatus can optimize the first neural network based on the gradient indicated by the indication information.

In a possible implementation of the first aspect, the first neural network includes a neural network deployed in a second communication apparatus; and that the first neural network is associated with the first processing includes: The neural network deployed in the second communication apparatus is used for second processing corresponding to the first processing, and the second processing includes at least one of the following: analog BF, analog-to-digital conversion, waveform reception, digital BF, RE demapping, channel equalization, layer demapping, demodulation, descrambling, de-rate matching, and decoding.

Optionally, when the second processing does not include some processing of the at least one of the foregoing processing, the some processing may be omitted or skipped, thereby reducing processing complexity and delay.

According to the foregoing technical solution, in a conventional signal receiver, the second processing corresponding to the first processing may be performed by a corresponding component. For example, decoding included in the second processing may be implemented by a decoder, and demodulation included in the second processing may be implemented by a demodulator. In the foregoing technical solution, at least one processing included in the second processing may be implemented by a neural network. The first neural network may include a neural network deployed in the second communication apparatus, and the neural network deployed in the second communication apparatus is used for the second processing corresponding to the first processing. In other words, the receiver of the first data can perform the second processing corresponding to the first processing based on the received first data to obtain an estimate of the second data, and optimize, based on the estimate of the second data and the preconfigured second data, the neural network deployed in the second communication apparatus, to optimize a receiver implemented based on the neural network.

It should be noted that the second processing corresponding to the first processing may be understood as that the second processing is inverse processing of the first processing. For example, when the first processing includes encoding, the second processing corresponding to the first processing may include decoding. In another example, when the first processing includes modulation, the second processing corresponding to the first processing may include demodulation.

In a possible implementation of the first aspect, the method further includes: The first communication apparatus sends third data, where the third data is data obtained after the first processing is performed on the second data, where a signal power of the first data is different from a signal power of the third data, and/or a modulation order of the first data is different from a modulation order of the third data.

According to the foregoing technical solution, the first communication apparatus may further send the third data obtained after the first processing is performed on the second data, where the signal power of the first data is different from the signal power of the third data, and/or the modulation order of the first data is different from the modulation order of the third data, so that the receiver of the first data can obtain the first data and the third data, and can subsequently optimize a data processing process in wireless communication based on the first data and the third data with different signal powers (and/or different modulation orders).

Optionally, a time-frequency resource carrying the first data and a time-frequency resource carrying the third data are located in a configured first time-frequency resource.

A second aspect of this application provides a communication method. The method is performed by a second communication apparatus, or the method is performed by some components (such as a processor, a chip, or a chip system) in a second communication apparatus, or the method may be implemented by a logic module or software that can implement all or some functions of a second communication apparatus. In the second aspect and a possible implementation thereof, an example in which the communication method is performed by a second communication apparatus is used for description. The second communication apparatus may be a terminal device or a network device. In the method, the second communication apparatus receives first data, where the first data is data obtained after first processing is performed on second data, and the second data is preconfigured; and the second communication apparatus performs second processing corresponding to the first processing on the first data.

According to the foregoing technical solution, the first data received by the second communication apparatus is the data obtained after the first processing is performed on the second data, and the second data is preconfigured; and then the second communication apparatus performs the second processing corresponding to the first processing on the first data. In other words, the second communication apparatus can determine the second data in a preconfigured manner, so that the second communication apparatus can perform the second processing corresponding to the first processing based on the received first data to obtain an estimate of the second data, and optimize a data processing process in wireless communication based on the estimate of the second data and the preconfigured second data, so as to improve communication efficiency.

In a possible implementation of the second aspect, the second data includes a virtual encoded bit.

According to the foregoing technical solution, the first data is data obtained after the first processing is performed on the second data, and the second data includes the virtual encoded bit. The virtual encoded bit does not need to undergo encoding and related processing (for example, processing that may exist before encoding, including information conversion), that is, the first processing may exclude encoding and related processing. Therefore, the first communication apparatus can omit or skip encoding and related processing by using the preconfigured virtual encoded bit, thereby reducing processing complexity and delay for the sender. In addition, by using the preconfigured virtual encoded bit, after the second communication apparatus receives the first data, the second communication apparatus can also omit or skip decoding corresponding to the encoding when performing the second processing corresponding to the first processing on the first data, thereby reducing processing complexity and delay for the second communication apparatus.

Optionally, a bit number of the virtual encoded bit is associated with at least one of a configured RE number, a configured modulation order, and a configured stream number.

Optionally, the virtual encoded bit is generated based on a first sequence, where the first sequence is a configured sequence; or the first sequence is a sequence determined based on a frame number of a configured time-domain resource and/or a configured stream number; or the first sequence is determined based on information about at least one of a configured time-domain resource, a configured frequency-domain resource, and a configured spatial-domain resource.

In a possible implementation of the second aspect, the second data includes a virtual information bit.

According to the foregoing technical solution, the first data is data obtained after the first processing is performed on the second data, and the second data includes the virtual information bit. The virtual information bit does not need to undergo information conversion, that is, the first processing may exclude information conversion. Therefore, the first communication apparatus can omit or skip information conversion by using the preconfigured virtual information bit, thereby reducing processing complexity and delay for the sender. In addition, by using the preconfigured virtual information bit, after the second communication apparatus receives the first data, the second communication apparatus can also omit or skip inverse processing corresponding to the information conversion when performing the second processing corresponding to the first processing on the first data, thereby reducing processing complexity and delay for the second communication apparatus.

In a possible implementation of the second aspect, the second data includes a virtual modulated symbol.

According to the foregoing technical solution, the first data is data obtained after the first processing is performed on the second data, and the second data includes the virtual modulated symbol. The virtual modulated symbol does not need to undergo modulation and related processing (for example, processing that may exist before modulation, including encoding), that is, the first processing may exclude modulation and related processing. Therefore, the first communication apparatus can omit or skip modulation and related processing by using the preconfigured virtual modulated symbol, thereby reducing processing complexity and delay for the sender. In addition, by using the preconfigured virtual modulated symbol, after the second communication apparatus receives the first data, the second communication apparatus can also omit or skip demodulation corresponding to the modulation when performing the second processing corresponding to the first processing on the first data, thereby reducing processing complexity and delay for the second communication apparatus.

Optionally, a number of virtual modulated symbols is associated with at least one of a configured RE number and a configured stream number.

Optionally, the virtual modulated symbol is a symbol determined based on a preset symbol sequence or a random sequence.

In a possible implementation of the second aspect, the second data includes a virtual sent signal.

According to the foregoing technical solution, the first data is data obtained after the first processing is performed on the second data, and the second data includes the virtual sent signal. The virtual sent signal does not need to undergo waveform generation and related processing (for example, processing that may exist before waveform generation, including encoding, modulation, and the like), that is, the first processing may exclude waveform generation and related processing. Therefore, the first communication apparatus can omit or skip waveform generation and related processing by using the preconfigured virtual sent signal, thereby reducing processing complexity and delay for the sender. In addition, by using the preconfigured virtual sent signal, after the second communication apparatus receives the first data, the second communication apparatus can also omit or skip waveform reception corresponding to the waveform generation when performing the second processing corresponding to the first processing on the first data, thereby reducing processing complexity and delay for the second communication apparatus.

Optionally, the sent signal is a random signal sequence, a preconfigured signal sequence, a constant-power signal, or a random signal.

In a possible implementation of the second aspect, the first data and the second data are used for a first neural network, and the first neural network is associated with the first processing.

According to the foregoing technical solution, the first data received by the second communication apparatus and the preconfigured second data may be used for the first neural network, and the first neural network is associated with the first processing. In other words, the second communication apparatus can perform the second processing corresponding to the first processing based on the received first data to obtain an estimate of the second data, and optimize the first neural network based on the estimate of the second data and the preconfigured second data.

It should be understood that a process of optimizing the first neural network may include one or more of training the first neural network, evaluating the first neural network, testing the first neural network, validating the first neural network, calibrating the first neural network, or the like.

In a possible implementation of the second aspect, the first neural network includes a neural network deployed in a first communication apparatus; and that the first neural network is associated with the first processing includes: The neural network deployed in the first communication apparatus is used for the first processing, and the first processing includes at least one of the following: encoding, rate matching, scrambling, modulation, layer mapping, precoding, resource element RE mapping, digital beamforming BF, waveform generation, digital-to-analog conversion, and analog BF.

Optionally, when the first processing does not include some processing of the at least one of the foregoing processing, the some processing may be omitted or skipped, thereby reducing processing complexity and delay.

According to the foregoing technical solution, in a conventional signal transmitter, the first processing may be performed by a corresponding component. For example, encoding included in the first processing may be implemented by an encoder, and modulation included in the first processing may be implemented by a modulator. In the foregoing technical solution, at least one processing included in the first processing may be implemented by a neural network. The first neural network may include a neural network deployed in the first communication apparatus, and the neural network deployed in the first communication apparatus is used for the first processing. In other words, the second communication apparatus can perform the second processing corresponding to the first processing based on the received first data to obtain an estimate of the second data, and optimize, based on the estimate of the second data and the preconfigured second data, the neural network deployed in the first communication apparatus, to optimize a transmitter implemented based on the neural network.

In a possible implementation of the second aspect, the method further includes: The second communication apparatus sends indication information indicating a gradient of the first neural network.

According to the foregoing technical solution, the second communication apparatus can send, based on the estimate of the second data and the preconfigured second data, the indication information indicating the gradient of the first neural network, so that the first communication apparatus can optimize the first neural network based on the gradient indicated by the indication information.

In a possible implementation of the second aspect, the first neural network includes a neural network deployed in a second communication apparatus; and that the first neural network is associated with the first processing includes: The neural network deployed in the second communication apparatus is used for second processing corresponding to the first processing, and the second processing includes at least one of the following: analog BF, analog-to-digital conversion, waveform reception, digital BF, RE demapping, channel equalization, layer demapping, demodulation, descrambling, de-rate matching, decoding, and another reception processing process.

Optionally, when the second processing does not include some processing of the at least one of the foregoing processing, the some processing may be omitted or skipped, thereby reducing processing complexity and delay.

According to the foregoing technical solution, in a conventional signal receiver, the second processing corresponding to the first processing may be performed by a corresponding component. For example, decoding included in the second processing may be implemented by a decoder, and demodulation included in the second processing may be implemented by a demodulator. In the foregoing technical solution, at least one processing included in the second processing may be implemented by a neural network. The first neural network may include a neural network deployed in the second communication apparatus, and the neural network deployed in the second communication apparatus is used for the second processing corresponding to the first processing. In other words, the second communication apparatus can perform the second processing corresponding to the first processing based on the received first data to obtain an estimate of the second data, and optimize, based on the estimate of the second data and the preconfigured second data, the neural network deployed in the first communication apparatus, to optimize a transmitter implemented based on the neural network.

In a possible implementation of the second aspect, the method further includes: The second communication apparatus receives third data, where the third data is data obtained after the first processing is performed on the second data, where a signal power of the first data is different from a signal power of the third data, and/or a modulation order of the first data is different from a modulation order of the third data.

According to the foregoing technical solution, the second communication apparatus may further receive the third data obtained after the first processing is performed on the second data. The signal power of the first data is different from the signal power of the third data, and/or the modulation order of the first data is different from the modulation order of the third data. In this case, the second communication apparatus can obtain the first data and the third data, and then can optimize a data processing process in wireless communication based on the first data and the third data with different signal powers (and/or different modulation orders).

Optionally, a time-frequency resource carrying the first data and a time-frequency resource carrying the third data are located in a configured first time-frequency resource.

A third aspect of this application provides a communication method. The method is performed by a first communication apparatus, or the method is performed by some components (such as a processor, a chip, or a chip system) in a first communication apparatus, or the method may be implemented by a logic module or software that can implement all or some functions of a first communication apparatus. In the third aspect and a possible implementation thereof, an example in which the communication method is performed by a first communication apparatus is used for description. The first communication apparatus may be a terminal device or a network device. In the method, the first communication apparatus determines first data and third data, where both the first data and the third data are obtained after first processing is performed on second data, where a signal power of the first data is different from a signal power of the third data, and/or a modulation order of the first data is different from a modulation order of the third data; and the first communication apparatus sends the first data and the third data.

According to the foregoing technical solution, the first communication apparatus may send the first data and the third data that are obtained after the first processing is performed on the second data. The signal power of the first data is different from the signal power of the third data, and/or the modulation order of the first data is different from the modulation order of the third data. After a second communication apparatus receives the first data and the third data, the second communication apparatus performs second processing corresponding to the first processing on the first data and the third data, and then can optimize a data processing process in wireless communication based on the first data and the third data with different signal powers (and/or different modulation orders).

Optionally, a time-frequency resource carrying the first data and a time-frequency resource carrying the third data are located in a configured first time-frequency resource.

A fourth aspect of this application provides a communication method. The method is performed by a second communication apparatus, or the method is performed by some components (such as a processor, a chip, or a chip system) in a second communication apparatus, or the method may be implemented by a logic module or software that can implement all or some functions of a second communication apparatus. In the fourth aspect and a possible implementation thereof, an example in which the communication method is performed by a second communication apparatus is used for description. The second communication apparatus may be a terminal device or a network device. In the method, the second communication apparatus receives first data and third data, where both the first data and the third data are obtained after first processing is performed on second data, where a signal power of the first data is different from a signal power of the third data, and/or a modulation order of the first data is different from a modulation order of the third data; and the second communication apparatus performs second processing corresponding to the first processing on the first data and the third data.

According to the foregoing technical solution, the second communication apparatus may receive the first data and the third data that are obtained after the first processing is performed on the second data. The signal power of the first data is different from the signal power of the third data, and/or the modulation order of the first data is different from the modulation order of the third data. After the second communication apparatus receives the first data and the third data, the second communication apparatus performs the second processing corresponding to the first processing on the first data and the third data, and then can optimize a data processing process in wireless communication based on the first data and the third data with different signal powers (and/or different modulation orders).

Optionally, a time-frequency resource carrying the first data and a time-frequency resource carrying the third data are located in a configured first time-frequency resource.

A fifth aspect of this application provides a communication apparatus. The apparatus is a first communication apparatus, or the apparatus is some components (such as a processor, a chip, or a chip system) in a first communication apparatus, or the apparatus is a logic module or software that can implement all or some functions of a first communication apparatus. In the fifth aspect and a possible implementation thereof, an example in which the communication apparatus is implemented by a first communication apparatus is used for description. The first communication apparatus may be a terminal device or a network device.

The apparatus includes a transceiver unit and a processing unit. The processing unit is configured to determine first data, where the first data is data obtained after first processing is performed on second data, and the second data is preconfigured. The transceiver unit is configured to send the first data.

In a possible implementation of the fifth aspect, the second data includes a virtual encoded bit.

In a possible implementation of the fifth aspect, a bit number of the virtual encoded bit is associated with at least one of a configured RE number, a configured modulation order, and a configured stream number.

In a possible implementation of the fifth aspect, the virtual encoded bit is generated based on a first sequence, where the first sequence is a configured sequence; or the first sequence is a sequence determined based on a frame number of a configured time-domain resource and/or a configured stream number; or the first sequence is determined based on information about at least one of a configured time-domain resource, a configured frequency-domain resource, and a configured spatial-domain resource.

In a possible implementation of the fifth aspect, the second data includes a virtual information bit.

In a possible implementation of the fifth aspect, the second data includes a virtual modulated symbol.

In a possible implementation of the fifth aspect, a number of virtual modulated symbols is associated with at least one of a configured RE number and a configured stream number.

In a possible implementation of the fifth aspect, the virtual modulated symbol is a symbol determined based on a preset symbol sequence or a random sequence.

In a possible implementation of the fifth aspect, the second data includes a virtual sent signal.

In a possible implementation of the fifth aspect, the sent signal is a random signal sequence, a preconfigured signal sequence, a constant-power signal, or a random signal.

In a possible implementation of the fifth aspect, the first data and the second data are used for a first neural network, and the first neural network is associated with the first processing.

In a possible implementation of the fifth aspect, the first neural network includes a neural network deployed in a first communication apparatus; and that the first neural network is associated with the first processing includes: The neural network deployed in the first communication apparatus is used for the first processing, and the first processing includes at least one of the following: encoding, rate matching, scrambling, modulation, layer mapping, precoding, resource element RE mapping, digital beamforming BF, waveform generation, digital-to-analog conversion, and analog BF.

In a possible implementation of the fifth aspect, the transceiver unit is further configured to receive indication information indicating a gradient of the first neural network.

In a possible implementation of the fifth aspect, the first neural network includes a neural network deployed in a second communication apparatus; and that the first neural network is associated with the first processing includes: The neural network deployed in the second communication apparatus is used for second processing corresponding to the first processing, and the second processing includes at least one of the following: analog BF, analog-to-digital conversion, waveform reception, digital BF, RE demapping, channel equalization, layer demapping, demodulation, descrambling, de-rate matching, decoding, and another reception processing process.

In a possible implementation of the fifth aspect, the transceiver unit is further configured to send third data, where the third data is data obtained after the first processing is performed on the second data, where a signal power of the first data is different from a signal power of the third data, and/or a modulation order of the first data is different from a modulation order of the third data.

In a possible implementation of the fifth aspect, a time-frequency resource carrying the first data and a time-frequency resource carrying the third data are located in a configured first time-frequency resource.

In the fifth aspect of this application, a composition module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus is a second communication apparatus, or the apparatus is some components (such as a processor, a chip, or a chip system) in a second communication apparatus, or the apparatus is a logic module or software that can implement all or some functions of a second communication apparatus. In the sixth aspect and a possible implementation thereof, an example in which the communication apparatus is implemented by a second communication apparatus is used for description. The second communication apparatus may be a terminal device or a network device.

The apparatus includes a transceiver unit and a processing unit. The transceiver unit is configured to receive first data, where the first data is data obtained after first processing is performed on second data, and the second data is preconfigured. The processing unit is configured to perform second processing corresponding to the first processing on the first data.

In a possible implementation of the sixth aspect, the second data includes a virtual encoded bit.

In a possible implementation of the sixth aspect, a bit number of the virtual encoded bit is associated with at least one of a configured RE number, a configured modulation order, and a configured stream number.

In a possible implementation of the sixth aspect, the virtual encoded bit is generated based on a first sequence, where the first sequence is a configured sequence; or the first sequence is a sequence determined based on a frame number of a configured time-domain resource and/or a configured stream number; or the first sequence is determined based on information about at least one of a configured time-domain resource, a configured frequency-domain resource, and a configured spatial-domain resource.

In a possible implementation of the sixth aspect, the second data includes a virtual information bit.

In a possible implementation of the sixth aspect, the second data includes a virtual modulated symbol.

In a possible implementation of the sixth aspect, a number of virtual modulated symbols is associated with at least one of a configured RE number and a configured stream number.

In a possible implementation of the sixth aspect, the virtual modulated symbol is a symbol determined based on a preset symbol sequence or a random sequence.

In a possible implementation of the sixth aspect, the second data includes a virtual sent signal.

In a possible implementation of the sixth aspect, the sent signal is a random signal sequence, a preconfigured signal sequence, a constant-power signal, or a random signal.

In a possible implementation of the sixth aspect, the first data and the second data are used for a first neural network, and the first neural network is associated with the first processing.

In a possible implementation of the sixth aspect, the first neural network includes a neural network deployed in a first communication apparatus; and that the first neural network is associated with the first processing includes: The neural network deployed in the first communication apparatus is used for the first processing, and the first processing includes at least one of the following: encoding, rate matching, scrambling, modulation, layer mapping, precoding, resource element RE mapping, digital beamforming BF, waveform generation, digital-to-analog conversion, and analog BF.

In a possible implementation of the sixth aspect, the transceiver unit is further configured to send indication information indicating a gradient of the first neural network.

In a possible implementation of the sixth aspect, the first neural network includes a neural network deployed in a second communication apparatus; and that the first neural network is associated with the first processing includes: The neural network deployed in the second communication apparatus is used for second processing corresponding to the first processing, and the second processing includes at least one of the following: analog BF, analog-to-digital conversion, waveform reception, digital BF, RE demapping, channel equalization, layer demapping, demodulation, descrambling, de-rate matching, decoding, and another reception processing process.

In a possible implementation of the sixth aspect, the transceiver unit is further configured to receive third data, where the third data is data obtained after the first processing is performed on the second data, where a signal power of the first data is different from a signal power of the third data, and/or a modulation order of the first data is different from a modulation order of the third data.

In a possible implementation of the sixth aspect, a time-frequency resource carrying the first data and a time-frequency resource carrying the third data are located in a configured first time-frequency resource.

In the sixth aspect of this application, a composition module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus is a first communication apparatus, or the apparatus is some components (such as a processor, a chip, or a chip system) in a first communication apparatus, or the apparatus is a logic module or software that can implement all or some functions of a first communication apparatus. In the seventh aspect and a possible implementation thereof, an example in which the communication apparatus is implemented by a first communication apparatus is used for description. The first communication apparatus may be a terminal device or a network device.

The apparatus includes a transceiver unit and a processing unit. The processing unit is configured to determine first data and third data, where both the first data and the third data are obtained after first processing is performed on second data, where a signal power of the first data is different from a signal power of the third data, and/or a modulation order of the first data is different from a modulation order of the third data. The transceiver unit is configured to send the first data and the third data.

In a possible implementation of the seventh aspect, a time-frequency resource carrying the first data and a time-frequency resource carrying the third data are located in a configured first time-frequency resource.

In the seventh aspect of this application, a composition module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus is a second communication apparatus, or the apparatus is some components (such as a processor, a chip, or a chip system) in a second communication apparatus, or the apparatus is a logic module or software that can implement all or some functions of a second communication apparatus. In the sixth aspect and a possible implementation thereof, an example in which the communication apparatus is implemented by a second communication apparatus is used for description. The second communication apparatus may be a terminal device or a network device.

The apparatus includes a transceiver unit and a processing unit. The transceiver unit is configured to determine to receive first data and third data, where both the first data and the third data are obtained after first processing is performed on second data, where a signal power of the first data is different from a signal power of the third data, and/or a modulation order of the first data is different from a modulation order of the third data. The processing unit is configured to perform second processing corresponding to the first processing on the first data and the third data.

In a possible implementation of the eighth aspect, a time-frequency resource carrying the first data and a time-frequency resource carrying the third data are located in a configured first time-frequency resource.

In the eighth aspect of this application, a composition module of the communication apparatus may be further configured to: perform the steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is coupled to a memory. The memory is configured to store a program or instructions. The at least one processor is configured to execute the program or instructions, to enable the apparatus to implement the method according to any possible implementation in any one of the first aspect to the fourth aspect.

A tenth aspect of embodiments of this application provides a communication apparatus, including at least one logic circuit and an input/output interface. The logic circuit is configured to perform the method according to any possible implementation in any one of the first aspect to the fourth aspect.

An eleventh aspect of embodiments of this application provides a communication system. The communication system includes the first communication apparatus and the second communication apparatus.

A twelfth aspect of embodiments of this application provides a computer-readable storage medium. The storage medium is configured to store one or more computer-executable instructions. When the computer-executable instructions are executed by a processor, the processor performs the method according to any possible implementation in any one of the first aspect to the fourth aspect.

A thirteenth aspect of embodiments of this application provides a computer program product (also referred to as a computer program). When the computer program in the computer program product is executed by a processor, the processor performs the method according to any possible implementation in any one of the first aspect to the fourth aspect.

A fourteenth aspect of embodiments of this application provides a chip system. The chip system includes at least one processor configured to support a communication apparatus to implement the method according to any possible implementation in any one of the first aspect to the fourth aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

For technical effects brought by any design in the fifth aspect to the fifteenth aspect, refer to the technical effects brought by different designs in the first aspect to the fourth aspect. Details are not described herein again.

## BRIEF DESCRIPTION OF DRAWINGS

FIG. 1a is a diagram of a communication system according to this application;
FIG. 1b is another diagram of a communication system according to this application;
FIG. 1c is another diagram of a communication system according to this application;
FIG. 2 is a diagram of interaction in a communication method according to this application;
FIG. 3 is a diagram of a signal processing process according to this application;
FIG. 4a is a diagram of an application example of a communication method according to this application;
FIG. 4b is another diagram of an application example of a communication method according to this application;
FIG. 4c is another diagram of an application example of a communication method according to this application;
FIG. 5a is another diagram of an application example of a communication method according to this application;
FIG. 5b is another diagram of an application example of a communication method according to this application;
FIG. 6a is another diagram of an application example of a communication method according to this application;
FIG. 6b is another diagram of an application example of a communication method according to this application;
FIG. 7 is another diagram of a communication method according to this application;
FIG. 8 is a diagram of a communication apparatus according to this application;
FIG. 9 is another diagram of a communication apparatus according to this application;
FIG. 10 is another diagram of a communication apparatus according to this application;
FIG. 11 is another diagram of a communication apparatus according to this application; and
FIG. 12 is another diagram of a communication apparatus according to this application.

## DESCRIPTION OF EMBODIMENTS

First, some terms in embodiments of this application are explained and described, to facilitate understanding of a person skilled in the art.

(1) A terminal device may be a wireless terminal device that can receive scheduling and indication information of a network device. The wireless terminal device may be a device that provides a user with voice and/or data connectivity, a handheld device with a wireless connection function, or another processing device connected to a wireless modem.

The terminal device may communicate with one or more core networks or the Internet via a radio access network (radio access network, RAN). The terminal device may be a mobile terminal device, such as a mobile phone (also referred to as a "cellular" phone or a mobile phone (mobile phone)), or a computer and a data card, for example, may be a portable, pocket-sized, handheld, computer-built-in, or on-board mobile apparatus that exchanges voice and/or data with the radio access network, such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer with a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, such as glasses, gloves, watches, clothes, and shoes. The wearable device is a portable device that can be directly worn on the body or integrated into clothes or an accessory of a user. The wearable device is a hardware device, and further implements a powerful function through software support, data exchange, and cloud interaction. In a broad sense, wearable intelligent devices include full-featured and large-sized devices that can implement all or some of functions without depending on smartphones, for example, smartwatches or smart glasses, and include devices that are dedicated to only one type of application functions and that need to collaboratively operate with other devices such as smartphones, for example, various smart bands, smart helmets, or smart jewelry for monitoring physical signs.

The terminal may alternatively be an unmanned aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may be a terminal device in an evolved communication system (for example, a 6th generation (6th generation, 6G) communication system) after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an unmanned aerial vehicle, and an internet of things (internet of things, IoT) device.

In an embodiment of this application, the terminal device may further obtain an AI service provided by a network device. Optionally, the terminal device may further have an AI processing capability.

(2) A network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (such as home evolved NodeB or home NodeB, HNB), a baseband unit (baseband unit, BBU), or a wireless fidelity (wireless fidelity, Wi-Fi) access point AP. In addition, in a network structure, the network device may include a central unit (central unit, CU) node, a distributed unit (distributed unit, DU) node, or a RAN device including a CU node and a DU node.

Optionally, the RAN node may be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, an on-board device, or the like. For example, an access network device in a vehicle-to-everything (vehicle-to-everything, V2X) technology may be a roadside unit (roadside unit, RSU).

In another possible scenario, a plurality of RAN nodes cooperate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between an access network device and a terminal device complies with a specified protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that can be implemented by the network elements, refer to Table 1.

Table 1

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function for the terminal device. A specific technique and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), or a public data network gateway (public data network gateway, PDN gateway, P-GW) in a 4th generation (4th generation, 4G) network; and an access and mobility management function (access and mobility management function, AMF), a user plane function (user plane function, UPF), or a session management function (session management function, SMF) in a 5G network. In addition, the core network device may further include another core network device in the 5G network and a next-generation network of the 5G network.

In an embodiment of this application, the network device may alternatively be a network node with an AI capability, and may provide an AI service for a terminal or another network device, for example, may be an AI node, a computing power node, a RAN node with an AI capability, or a core network element with an AI capability on a network side (an access network or a core network).

In an embodiment of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are included. The configuration means that a network device/server sends configuration information of some parameters or values of parameters to a terminal via a message or signaling, for the terminal to determine, based on the values or the information, a communication parameter or a resource used during transmission. Similar to the configuration, the preconfiguration may include parameter information or parameter values negotiated between a network device/server and a terminal device in advance, or may include parameter information or parameter values specified by standard protocols for a base station/network device or a terminal device, or may include parameter information or parameter values pre-stored in a base station/server or a terminal device. This is not limited in this application.

Further, these values and parameters may be changed or updated.

(4) Terms "system" and "network" in embodiments of this application may be used interchangeably. "A plurality of" means two or more than two. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between associated objects. "At least one of the following items (pieces)" or a similar expression thereof means any combination of these items, including a singular item (piece) or any combination of plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on information between a source end at which the information is sent and a destination end, but the destination end can understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed. For example, specific information may be indicated with the help of an arrangement sequence of all pieces of information that is pre-agreed (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

In this application, unless otherwise specified, mutual reference may be made between same or similar parts of various embodiments. In various embodiments of this application and various methods/designs/implementations in embodiments, unless otherwise specified or logic conflicts occur, terms and/or descriptions between different embodiments and between the methods/designs/implementations in embodiments are consistent and may be mutually referenced, and technical features in different embodiments and the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

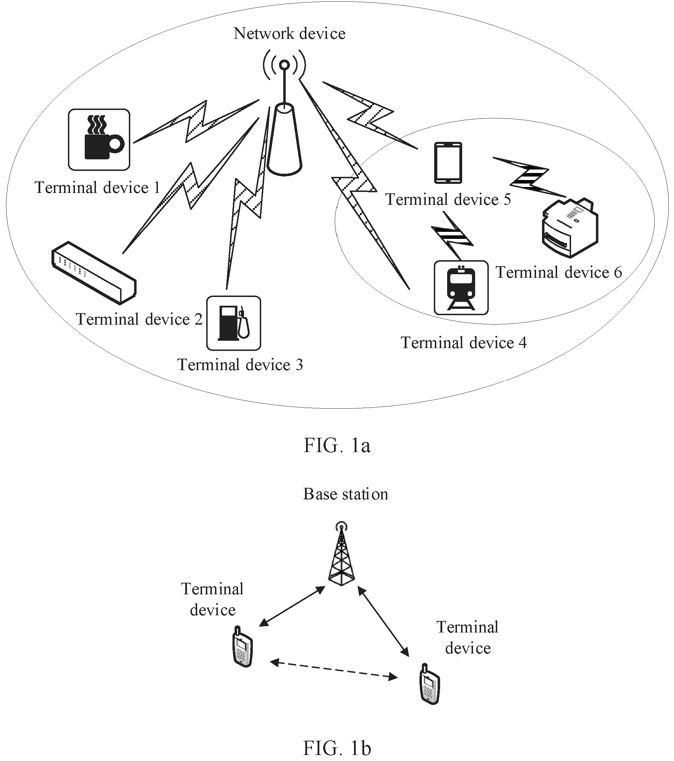

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6. The example shown in FIG. 1a is described with the terminal device 1 as a smart teacup, the terminal device 2 as a smart air conditioner, the terminal device 3 as a smart fuel dispenser, the terminal device 4 as a transportation means, the terminal device 5 as a mobile phone, and the terminal device 6 as a printer.

As shown in FIG. 1a, an AI configuration information sending entity may be the network device. An AI configuration information receiving entity may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. In addition, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in a system of Internet of Vehicles, the terminal device 5 separately sends AI configuration information to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

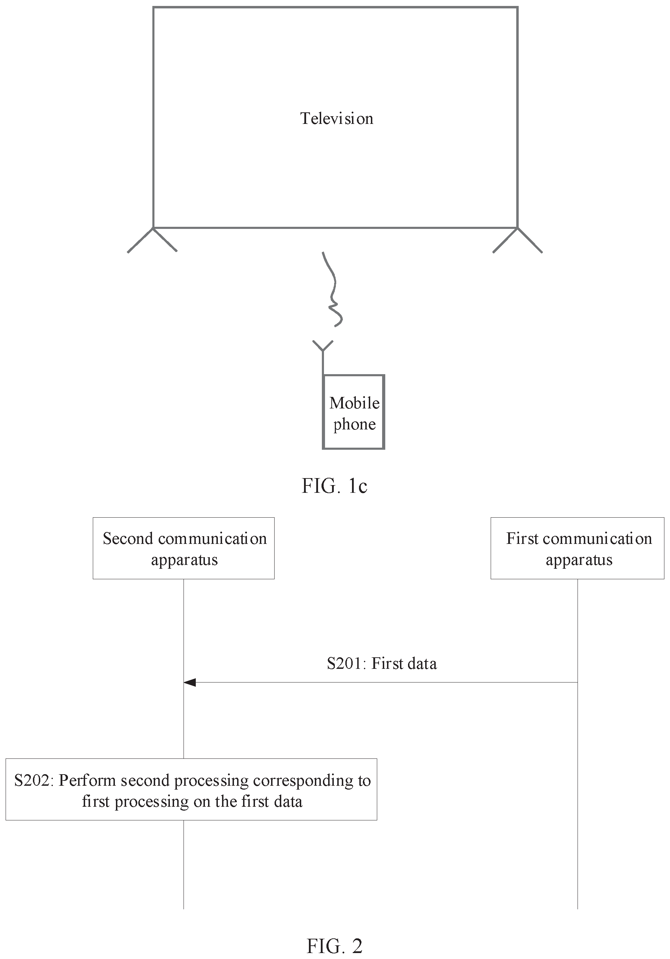

The communication system shown in FIG. 1a is used as an example. In addition to a communication-related service, an AI-related service may be performed between different devices (between network devices, between a network device and a terminal device, and/or between terminal devices). For example, as shown in FIG. 1b, an example in which a network device is a base station is used. A communication-related service and an AI-related service may be performed between the base station and one or more terminal devices, and the communication-related service and the AI-related service may also be performed between different terminal devices. In another example, as shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in a communication system. For example, the AI network element may be an AI module built in an access network device, a core network device, a cloud server, or operation, administration and maintenance (operation, administration and maintenance, OAM), to implement an AI-related function. The OAM may be used for a core network device and/or for an access network device. Alternatively, the AI network element may be an independently configured network element in the communication system. Optionally, a terminal or a chip built in the terminal may also include an AI entity configured to implement an AI-related function.

Currently, in a wireless communication system (for example, the communication system shown in FIG. 1a, FIG. 1b, or FIG. 1c), a communication node serving as a signal sender may perform a plurality of processing processes, including channel encoding, modulation, and the like, on to-be-sent raw data. Correspondingly, a communication node serving as a signal receiver may perform other processing processes corresponding to the plurality of processing processes, including channel decoding, demodulation, and the like, on a received signal, to restore the raw data (or obtain an estimate of the raw data). These processing processes can improve data transmission reliability. However, in the wireless communication system, how to improve data processing efficiency is a technical problem to be resolved urgently.

To resolve the foregoing problem, this application provides a communication method and a related device, to optimize a data processing process in wireless communication, so as to improve communication efficiency. Detailed descriptions are provided below with reference to the accompanying drawings.

FIG. 2 is a diagram of an implementation of a communication method according to this application. The method includes the following steps.

It needs to be noted that, in FIG. 2, an example in which a first communication apparatus and a second communication apparatus are used as execution bodies for the interaction example is used to illustrate the method. However, the execution bodies for the interaction example are not limited in this application. For example, in FIG. 2 and the corresponding implementation, an execution body for S201 is the first communication apparatus. Alternatively, the execution body may be a chip, a chip system, or a processor that supports the first communication apparatus to implement the method, or may be a logic module or software that can implement all or some functions of the first communication apparatus. In FIG. 2 and the corresponding implementation, the second communication apparatus in S201 and S202 may be replaced with a chip, a chip system, or a processor that supports the second communication apparatus to implement the method, or may be replaced with a logic module or software that can implement all or some functions of the second communication apparatus.

S201: The first communication apparatus sends first data, and correspondingly, the second communication apparatus receives the first data. The first data is data obtained after first processing is performed on second data, and the second data is preconfigured.

S202: The second communication apparatus performs second processing corresponding to the first processing on the first data.

In a possible implementation, the first data sent by the first communication apparatus in step S201 and the preconfigured second data may be used for a first neural network, and the first neural network is associated with the first processing. Specifically, a receiver (for example, the second communication apparatus) of the first data can perform the second processing corresponding to the first processing based on the received first data to obtain an estimate of the second data, and optimize the first neural network based on the estimate of the second data and the preconfigured second data.

It should be understood that a process of optimizing the first neural network may include one or more of training the first neural network, evaluating the first neural network, testing the first neural network, validating the first neural network, calibrating the first neural network, or the like. In addition, the first neural network may be implemented in a plurality of manners. The following provides descriptions with reference to some implementation examples.

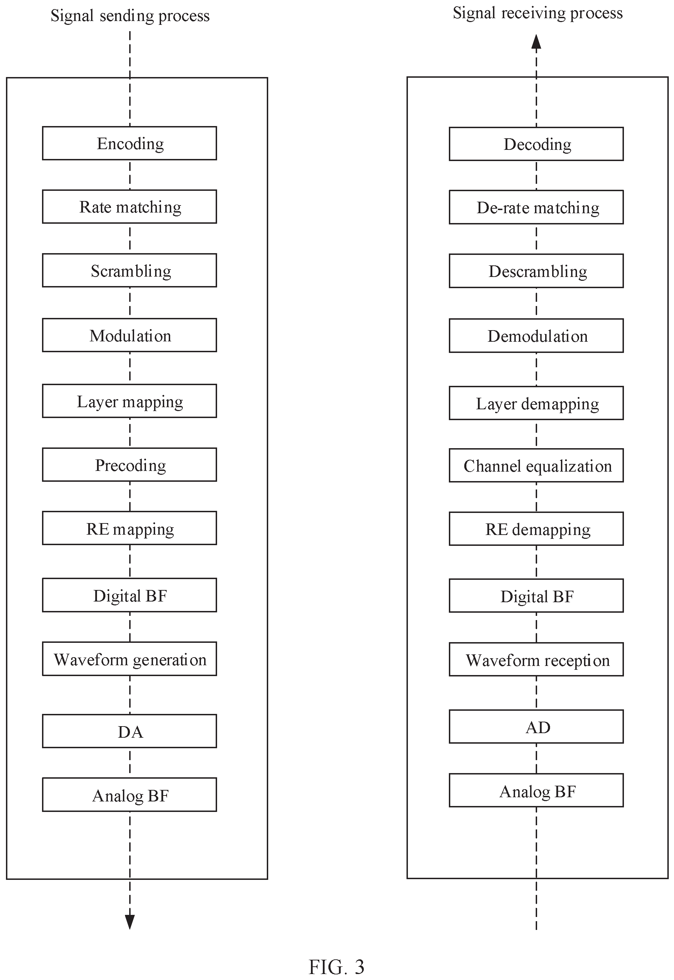

Implementation 1: The first neural network includes a neural network deployed in the first communication apparatus. Correspondingly, in implementation 1, that the first neural network is associated with the first processing includes: The neural network deployed in the first communication apparatus is used for the first processing. For example, in FIG. 3, the first communication apparatus is used as a sender of the first data, and the first processing includes at least one of the following in a signal sending process: encoding, rate matching, scrambling, modulation, layer mapping, precoding, RE mapping, digital BF, waveform generation, digital-to-analog conversion, and analog BF.

Optionally, in addition to the at least one of the foregoing processing shown in FIG. 3, the first processing may further include other processing, such as filtering (filter), power amplification, and peak clipping.

Optionally, when the first processing does not include some processing of the at least one of the foregoing processing, the some processing may be omitted or skipped, thereby reducing processing complexity and delay.

Specifically, in a conventional signal transmitter, the first processing may be performed by a corresponding component. For example, encoding included in the first processing may be implemented by an encoder, and modulation included in the first processing may be implemented by a modulator. In the foregoing technical solution, at least one processing included in the first processing may be implemented by a neural network. In implementation 1, the first neural network may include a neural network deployed in the first communication apparatus, and the neural network deployed in the first communication apparatus is used for the first processing. In other words, the receiver of the first data can perform the second processing corresponding to the first processing based on the received first data to obtain an estimate of the second data, and optimize, based on the estimate of the second data and the preconfigured second data, the neural network deployed in the first communication apparatus, to optimize a transmitter implemented based on the neural network.

Optionally, when the first neural network may include the neural network deployed in the first communication apparatus, the method further includes: The first communication apparatus receives indication information indicating a gradient of the first neural network. Specifically, the receiver of the first data can send, based on the estimate of the second data and the preconfigured second data, the indication information indicating the gradient of the first neural network, so that the first communication apparatus can optimize the first neural network based on the gradient indicated by the indication information.

Implementation 2: The first neural network includes a neural network deployed in the second communication apparatus. Correspondingly, in implementation 2, that the first neural network is associated with the first processing includes: The neural network deployed in the second communication apparatus is used for the second processing corresponding to the first processing. For example, in FIG. 3, the second communication apparatus is used as a receiver of the first data, and the second processing includes at least one of the following in a signal receiving process: analog BF, analog-to-digital conversion, waveform reception, digital BF, RE demapping, channel equalization, layer demapping, demodulation, descrambling, de-rate matching, and decoding.

Optionally, in addition to the at least one of the foregoing processing shown in FIG. 3, the second processing may further include other processing, such as filtering (filter) and peak clipping.

Optionally, when the second processing does not include some processing of the at least one of the foregoing processing, the some processing may be omitted or skipped, thereby reducing processing complexity and delay.

Specifically, in a conventional signal receiver, the second processing corresponding to the first processing may be performed by a corresponding component. For example, decoding included in the second processing may be implemented by a decoder, and demodulation included in the second processing may be implemented by a demodulator. In the foregoing technical solution, at least one processing included in the second processing may be implemented by a neural network. In implementation 2, the first neural network may include a neural network deployed in the second communication apparatus, and the neural network deployed in the second communication apparatus is used for the second processing corresponding to the first processing. In other words, the receiver of the first data can perform the second processing corresponding to the first processing based on the received first data to obtain an estimate of the second data, and optimize, based on the estimate of the second data and the preconfigured second data, the neural network deployed in the second communication apparatus, to optimize a receiver implemented based on the neural network.

It should be noted that the second processing corresponding to the first processing may be understood as that the second processing is inverse processing of the first processing. For example, when the first processing includes encoding, the second processing corresponding to the first processing may include decoding. In another example, when the first processing includes modulation, the second processing corresponding to the first processing may include demodulation.

Optionally, the second processing includes inverse processing of the first processing. However, this does not mean that processing included in the first processing of a transmitter is in one-to-one correspondence with processing included in the second processing of a receiver. This is because the neural network deployed in the first communication apparatus may include one or a combination of more processing in the first processing, and similarly, the neural network deployed in the second communication apparatus may include one or a combination of more processing in the second processing. For example, the first processing of the first communication apparatus may include modulation, and the neural network deployed in the second communication apparatus may implement both channel equalization and demodulation. In this case, the "demodulation corresponding to modulation" of the second communication apparatus can be implemented by using the neural network. Therefore, the second processing of the second communication apparatus does not necessarily require a specific module for inverse processing corresponding to modulation.

Implementation 3: The first neural network includes a neural network deployed in the first communication apparatus and a neural network deployed in the second communication apparatus. In other words, through the foregoing processes of sending and receiving the first data, the neural network deployed in the first communication apparatus and the neural network deployed in the second communication apparatus can be optimized, to optimize both a transmitter and a receiver that are implemented based on the neural networks.

It should be noted that, in implementation 3, for an implementation in which the first neural network includes the neural network deployed in the first communication apparatus, refer to the implementation process of implementation 1; and for an implementation in which the first neural network includes the neural network deployed in the second communication apparatus, refer to the implementation process of implementation 2.

It can be learned from the foregoing implementation processes that some components for data processing in the signal transmitter and the signal receiver can be implemented by using the neural network. In this case, the signal transmitter and the signal receiver that are implemented based on the neural network can be optimized based on a scenario through data-driven training, so that data processing efficiency can be improved, and better sent signal design and reception performance can be achieved. In other words, the signal transmitter and the signal receiver can optimize (for example, train/evaluate/test/validate/calibrate) the neural network in the signal transmitter and/or the signal receiver through processes of sending and receiving one or more pieces of data, where the one or more pieces of data are used as a processing sample for the neural network.

In addition, in conventional signal sending and receiving processes, as shown in FIG. 3, in a signal sending process, information transmitted by the transmitter needs to undergo information conversion to obtain an information bit (for example, a binary information bit), and then the information bit sequentially undergoes corresponding processing in the signal sending process in FIG. 3 and is then sent. Correspondingly, after receiving data, the receiver needs to perform corresponding processing in the signal receiving process in FIG. 3 to obtain an information bit, and then perform information conversion to obtain raw data (or an estimate of raw data). However, when some components for data processing in the signal transmitter or the signal receiver are implemented by using the neural network, if one or more pieces of data that are used as a processing sample for the neural network still undergo all processing in the signal sending process shown in FIG. 3 and all processing in the signal receiving process shown in FIG. 3, unnecessary processing complexity and delay are caused. For example, in the transmitter, when a modulator for modulation in the signal sending process is replaced with a neural network, one or more pieces of data that are sent by the transmitter and that are used as a processing sample are mainly used to optimize the neural network used as the modulator. In the signal sending process shown in FIG. 3, encoding, rate matching, scrambling, and the like that are performed on the one or more pieces of data are unnecessary. Therefore, in the foregoing technical solution, the preconfigured second data may be implemented in a plurality of manners. The following provides descriptions with reference to some specific implementations.

Manner 1: The second data includes a virtual encoded bit.

It should be noted that the virtual encoded bit may be a bit obtained after encoding, that is, the virtual encoded bit is a bit to undergo another processing process after encoding in the foregoing one or more sending processing processes (for example, a to-be-modulated bit). In other words, the virtual encoded bit may be a bit that does not undergo (or does not need to undergo) encoding, where the virtual encoded bit may be referred to as a pseudo-encoded bit.

In manner 1, the first data is data obtained after the first processing is performed on the second data, and the second data includes the virtual encoded bit. The virtual encoded bit does not need to undergo encoding and related processing (for example, processing that may exist before encoding, including information conversion), that is, the first processing may exclude encoding and related processing. Therefore, the first communication apparatus can omit or skip encoding and related processing by using the preconfigured virtual encoded bit, thereby reducing processing complexity and delay for the sender. In addition, by using the preconfigured virtual encoded bit, after the receiver (for example, the second communication apparatus) of the first data receives the first data, the receiver can also omit or skip decoding corresponding to the encoding when performing the second processing corresponding to the first processing on the first data, thereby reducing processing complexity and delay for the receiver.

Optionally, a bit number of the virtual encoded bit is associated with at least one of a configured resource element (resource element, RE) number, a configured modulation order, and a configured stream number. For example, a virtual encoded bit number may be determined based on a configured resource number $n\_re$, modulation order $n\_mod$, and stream number $n\_ss$. For example, the virtual encoded bit number $n\_bit$ satisfies $n\_bit = n\_re*n\_mod*n\_ss$.

Optionally, the virtual encoded bit is generated based on a first sequence, where the first sequence is a configured sequence; or the first sequence is a sequence determined based on a frame number of a configured time-domain resource and/or a configured stream number; or the first sequence is determined based on information about at least one of a configured time-domain resource, a configured frequency-domain resource, and a configured spatial-domain resource.

In an implementation example, the first sequence is determined based on the frame number of the configured time-domain resource and/or a configured stream number. The first sequence may be referred to as a pseudo-random sequence, and an initial value of the pseudo-random sequence may be determined based on the frame number or the stream number, to generate different random bits based on different frames and different streams. For example, the pseudo-random (pseudo-random, PN) sequence may be generated based on a linear feedback shift register (linear feedback shift register, LFSR), and $c_{init}$ is for initializing the register, where $c_{init}$ satisfies:

$$c_{init} = n_{RNTI} * 2^{15} + n_{init} * 2^{12} + n_{ss} * 2^{10} + n_f$$

$c_{init}$ is an initial value of the register for the pseudo-random sequence, $n_{RNTI}$ is an RNTI of a user or a cell, $n_{init}$ is an initial value (for example, a configured initial value), $n_{ss}$ is an index of a data stream, and $n_f$ is a currently transmitted frame number.

In another implementation example, the first sequence is determined based on information about at least one of a configured time-domain resource, a configured frequency-domain resource, and a configured spatial-domain resource. For example, the first sequence satisfies:

$$B = (i\%K)_2$$

$$i = \left(N_{symb}^{slot} n_{s,f}^{u} + l + 1\right) * N_{re}^{rb} * n_{rb} + k * 2 + n_{ss} + n_{init}$$

B is a binary bit of the first sequence, i is a resource-related integer, $(i\%K)_2$ represents a binary result of i modulo K, $N_{symb}^{slot}$ represents a number of symbols in each slot, $n_{s,f}^{u}$ represents a slot number in a frame corresponding to a case in which a subcarrier spacing is configured as u, l is a symbol index, $N_{re}^{rb}$ represents a number of resources in a resource block, $n_{rb}$ represents a resource block number, k is a frequency-domain subcarrier index, $n_{ss}$ represents a spatial stream number, and $n_{init}$ represents an initial value (for example, a configured initial value).

Optionally, B may be generated in a unit of bit or byte (Byte). For example, when B is generated in a unit of byte, a value of K satisfies K = 2^8, or a value of K satisfies K = 2^n_mod (n_mod indicates a modulation order).

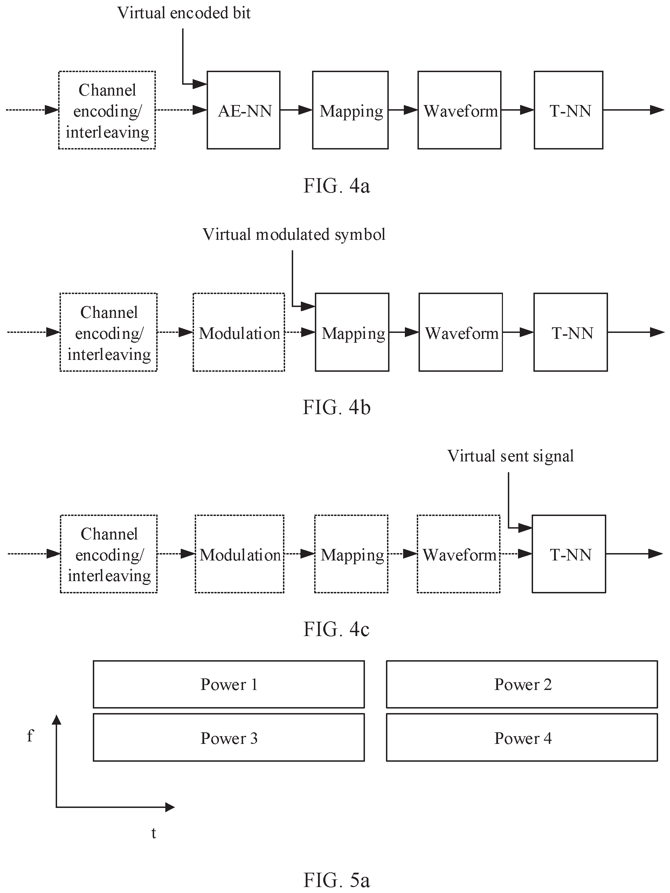

For example, the first neural network includes a neural network deployed in a transmitter (for example, the first communication apparatus). Processing in a signal sending process of the first communication apparatus includes a process shown in FIG. 4a, such as channel encoding/interleaving (which may be for performing encoding, rate matching, and scrambling in FIG. 3), modulation based on an autoencoder neural network (autoencoder neural network, AE-NN) (which may be for performing modulation in FIG. 3), mapping (which may be for performing layer mapping, precoding, RE mapping, and digital BF in FIG. 3), waveform (which may be for performing waveform generation in FIG. 3), and time-domain neural network (time-domain neural network, T-NN) (or time neural network (time neural network, T-NN)) processing (for example, T-NN may include processing such as filtering (filter) and peak clipping). In manner 1, when the second data includes the virtual encoded bit, the virtual encoded bit may be defined as a to-be-modulated bit, that is, a bit obtained after channel encoding in conventional data transmission. The virtual encoded bit is a bit generated according to an agreed-upon rule, and a transmit end and a receive end can generate a same bit according to a same rule, so that the virtual encoded bit can be used for training, evaluation, testing, validation, calibration, or the like of an intelligent air interface neural network. As shown in FIG. 4a, the virtual encoded bit may be generated before AE-NN in FIG. 4a (that is, without performing channel encoding/interleaving, to reduce complexity and delay). The first communication apparatus may perform modulation and subsequent module processing on the second data including the virtual encoded bit to obtain the first data, and send the first data in step S201. As shown in FIG. 4a, this processing procedure may be for training, evaluation, testing, validation, calibration, or the like of neural networks in modulation and subsequent precoding and waveform modules.

Optionally, in manner 1, when the neural network deployed in the first communication apparatus includes AE-NN, in addition to the virtual encoded bit, the second data may further include an information bit. Different from the virtual encoded bit, the information bit may further undergo channel encoding/interleaving before being input to AE-NN.

Manner 2: The second data includes a virtual information bit.

It should be noted that the virtual information bit may be a bit obtained after information conversion, that is, the virtual information bit is a bit to undergo the foregoing one or more sending processing processes (for example, a to-be-encoded bit). In other words, the virtual information bit may be a bit that does not undergo (or does not need to undergo) information conversion, where the virtual information bit may be referred to as a pseudo-information bit.

In manner 2, the first data is data obtained after the first processing is performed on the second data, and the second data includes the virtual information bit. The virtual information bit does not need to undergo information conversion, that is, the first processing may exclude information conversion. Therefore, the first communication apparatus can omit or skip information conversion by using the preconfigured virtual information bit, thereby reducing processing complexity and delay for the sender. In addition, by using the preconfigured virtual information bit, after the receiver (for example, the second communication apparatus) of the first data receives the first data, the receiver can also omit or skip inverse processing corresponding to the information conversion when performing the second processing corresponding to the first processing on the first data, thereby reducing processing complexity and delay for the receiver.

Manner 3: The second data includes a virtual modulated symbol.

It should be noted that the virtual modulated symbol may be a signal obtained after modulation, that is, the virtual modulated symbol is a signal to undergo another processing process after modulation in the foregoing one or more sending processing processes (for example, a signal on which RE mapping is to be performed). In other words, the virtual modulated symbol may be a symbol that does not undergo (or does not need to undergo) modulation, where the virtual modulated symbol may be referred to as a pseudo-modulated symbol.

In manner 3, the first data is data obtained after the first processing is performed on the second data, and the second data includes the virtual modulated symbol. The virtual modulated symbol does not need to undergo modulation and related processing (for example, processing that may exist before modulation, including encoding), that is, the first processing may exclude modulation and related processing. Therefore, the first communication apparatus can omit or skip modulation and related processing by using the preconfigured virtual modulated symbol, thereby reducing processing complexity and delay for the sender. In addition, by using the preconfigured virtual modulated symbol, after the receiver (for example, the second communication apparatus) of the first data receives the first data, the receiver can also omit or skip demodulation corresponding to the modulation when performing the second processing corresponding to the first processing on the first data, thereby reducing processing complexity and delay for the receiver.

Optionally, a number of virtual modulated symbols is associated with at least one of a configured RE number and a configured stream number.

Optionally, the virtual modulated symbol is a symbol determined based on a preset symbol sequence or a random sequence, for example, a preset or pseudo-random QAM symbol, or in another example, a random signal that meets a specific distribution (for example, a complex Gaussian signal).

For example, the first neural network includes a neural network deployed in a transmitter (for example, the first communication apparatus). Processing in a signal sending process of the first communication apparatus includes a process shown in FIG. 4b, such as channel encoding/interleaving, modulation, mapping, waveform, and T-NN processing. In manner 3, when the second data includes the virtual modulated symbol, the virtual modulated symbol is defined as a signal to be mapped to a transmission resource, that is, a symbol obtained after modulation in conventional data transmission. As shown in FIG. 4b, the second data including the virtual modulated symbol may be used as an input of a mapping module (that is, without performing channel encoding/interleaving and modulation, to reduce complexity and delay). Then, the first communication apparatus may perform precoding, waveform, and other processing on the second data including the virtual modulated symbol to obtain the first data, and send the first data in step S201.

Optionally, in manner 3, in addition to the virtual modulated symbol, the second data may further include other information. Different from the virtual modulated symbol, the other information may further undergo channel encoding/interleaving and/or modulation before being input to the mapping module.

Manner 4: The second data includes a virtual sent signal.

It should be noted that the virtual sent signal may be a signal sent after waveform generation or after time-domain neural network processing, that is, the virtual sent signal is a signal to undergo another processing process after waveform generation in the foregoing one or more sending processing processes (for example, a signal on which carrier modulation is to be performed). In other words, the virtual sent signal may be a signal that does not undergo (or does not need to undergo) waveform generation, where the virtual sent signal may be referred to as a pseudo-sent signal.

In manner 4, the first data is data obtained after the first processing is performed on the second data, and the second data includes the virtual sent signal. The virtual sent signal does not need to undergo waveform generation and related processing (for example, processing that may exist before waveform generation, including encoding, modulation, and the like), that is, the first processing may exclude waveform generation and related processing. Therefore, the first communication apparatus can omit or skip waveform generation and related processing by using the preconfigured virtual sent signal, thereby reducing processing complexity and delay for the sender. In addition, by using the preconfigured virtual sent signal, after the receiver (for example, the second communication apparatus) of the first data receives the first data, the receiver can also omit or skip waveform reception corresponding to the waveform generation when performing the second processing corresponding to the first processing on the first data, thereby reducing processing complexity and delay for the receiver.

Optionally, the sent signal is a random signal sequence, a preconfigured signal sequence, a constant-power signal, or a random signal.

For example, the first neural network includes a neural network deployed in a transmitter (for example, the first communication apparatus). Processing in a signal sending process of the first communication apparatus includes a process shown in FIG. 4c, such as channel encoding/interleaving, AE-NN modulation, mapping, waveform, and T-NN processing. In manner 4, when the second data includes the virtual sent signal, the virtual sent signal may be defined as a to-be-sent sampled signal. As shown in FIG. 4c, the second data including the virtual sent signal may be used as an input of T-NN (that is, without performing channel encoding/interleaving, modulation, mapping, and waveform, to reduce complexity and delay). Then, the first communication apparatus may perform digital-to-analog conversion on the second data including the virtual sent signal to obtain the first data, and send the first data in step S201.

Optionally, in manner 4, in addition to the virtual sent signal, the second data may further include other information. Different from the virtual sent signal, the other information may further undergo one or more of channel encoding/interleaving, modulation, mapping, and waveform processing before being input to the mapping module.

In a possible implementation, the method further includes: The first communication apparatus sends third data, where the third data is data obtained after the first processing is performed on the second data, where a signal power of the first data is different from a signal power of the third data, and/or a modulation order of the first data is different from a modulation order of the third data. Specifically, the first communication apparatus may further send the third data obtained after the first processing is performed on the second data, where the signal power of the first data is different from the signal power of the third data, and/or the modulation order of the first data is different from the modulation order of the third data, so that the receiver of the first data can obtain the first data and the third data, and can subsequently optimize a data processing process in wireless communication based on the first data and the third data with different signal powers (and/or different modulation orders).

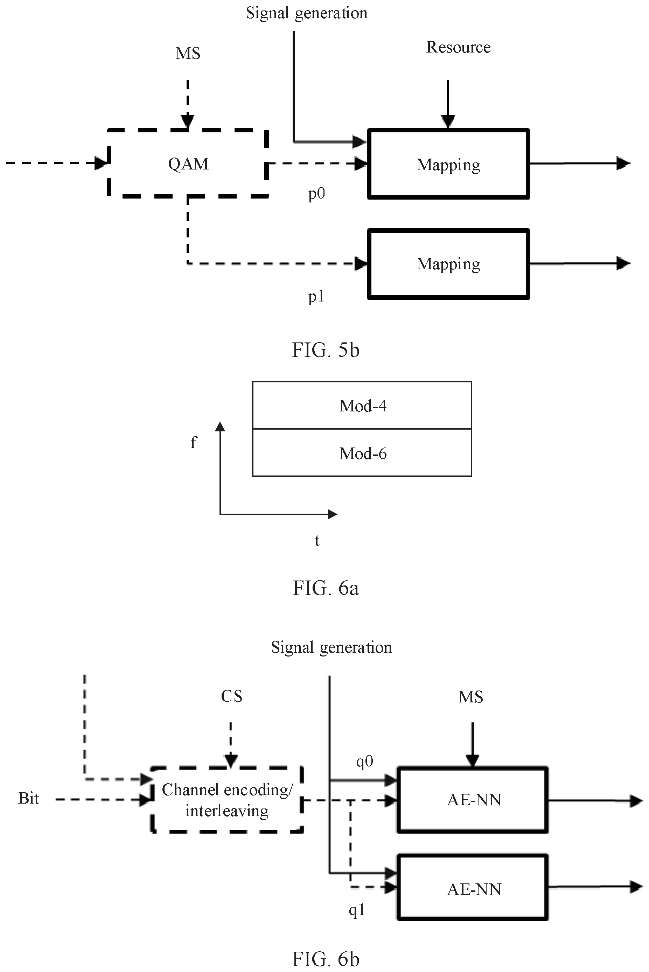

For example, in FIG. 5a, when the preconfigured second data is transmitted, parallel transmission resources with different powers (for example, at least two of a power 1, a power 2, a power 3, and a power 4 in FIG. 5a) may be preconfigured, and the first data and the third data with different powers may be obtained and transmitted. For example, the first data and the third data with different powers may be represented as "p0" and "p1" in FIG. 5b. The preconfigured second data may undergo processing in a same modulation module, and then may be processed by different power control modules to generate data with different powers, and the data is mapped to preconfigured resources for sending.

For example, in FIG. 6a, the preconfigured second data with different configurations (for example, Mod-4 and Mod-6 in FIG. 6a) may be simultaneously transmitted in single transmission. Mod-4 may indicate that a modulation order is 4, for example, 16 quadrature amplitude modulation (quadrature amplitude modulation, QAM). Mod-6 may indicate that a modulation order is 6, for example, 64QAM. The first data and the third data are constructed under similar channel conditions. For example, the first data and the third data with different modulation orders may be represented as "q0" and "q1" in FIG. 6b. Same or different data may be generated and may respectively undergo processing in different AE-NN modules, and then mapped to preconfigured resources for sending. For example, different orders are mapped to preconfigured time-frequency resources.

Optionally, a time-frequency resource carrying the first data and a time-frequency resource carrying the third data are located in a configured first time-frequency resource. For example, the first communication apparatus is a terminal device and the second communication apparatus is a network device. The second communication apparatus may configure the first time-frequency resource to the first communication apparatus by sending configuration information. Correspondingly, after receiving the configuration information, the first communication apparatus determines, in the first time-frequency resource configured in the configuration information, that a first sub-resource is the time-frequency resource carrying the first data and that a second sub-resource is the time-frequency resource carrying the third data. Both the first sub-resource and the second sub-resource are subsets of the first time-frequency resource, and the first sub-resource and the second sub-resource are different. In addition, resource indexes of the first sub-resource and the second sub-resource may be configured based on the configuration information, or may be configured in a preconfigured manner. This is not limited herein.

Optionally, the first data and the third data that are sent based on different configurations may be used for evaluation and comparison of correspondingly configured models. The first data and the third data with different modulation orders are used as an example. The neural network deployed in the first communication apparatus or the second communication apparatus may include a neural network corresponding to Mod-4 and a neural network corresponding to Mod-6. Based on processing processes of the first data and the third data, the first data and the third data may be respectively used for evaluation and comparison of the neural network corresponding to Mod-4 and the neural network corresponding to Mod-6. An evaluation result or a comparison result may be used for subsequent selection of the neural networks under different channel conditions.

Based on the technical solution shown in FIG. 2, the first data sent by the first communication apparatus in step S201 is the data obtained after the first processing is performed on the second data, and the second data is preconfigured. In other words, the second communication apparatus can determine the second data in a preconfigured manner, so that the second communication apparatus can perform the second processing corresponding to the first processing based on the received first data in step S202 to obtain an estimate of the second data, and optimize a data processing process in wireless communication based on the estimate of the second data and the preconfigured second data, so as to improve communication efficiency.

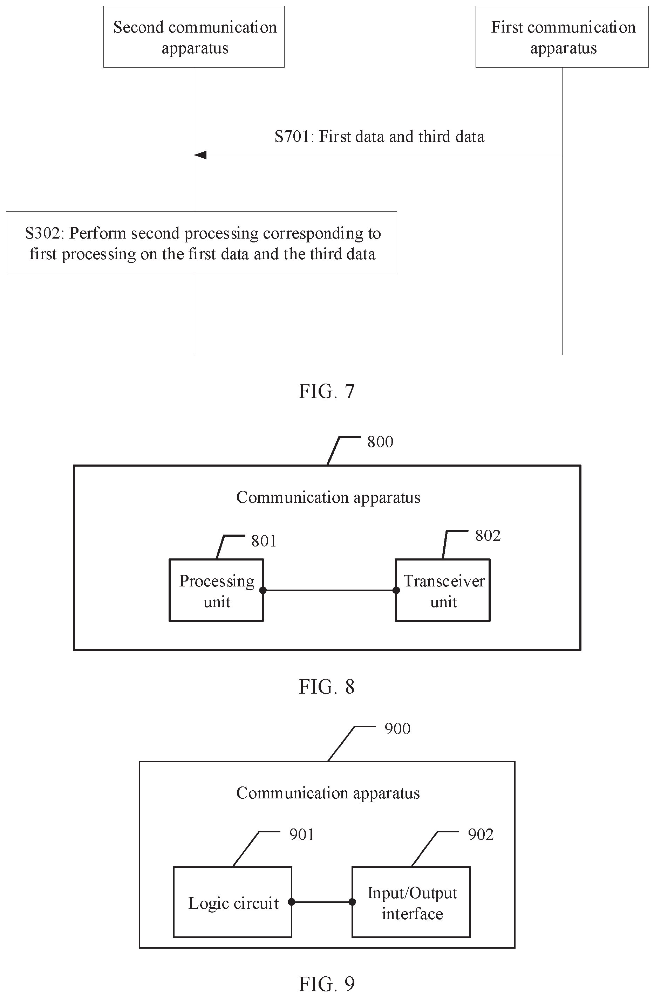

FIG. 7 is a diagram of an implementation of a communication method according to this application. The method includes the following steps.

It needs to be noted that, in FIG. 7, an example in which a first communication apparatus and a second communication apparatus are used as execution bodies for the interaction example is used to illustrate the method. However, the execution bodies for the interaction example are not limited in this application. For example, in FIG. 7 and the corresponding implementation, an execution body for S701 is the first communication apparatus. Alternatively, the execution body may be a chip, a chip system, or a processor that supports the first communication apparatus to implement the method, or may be a logic module or software that can implement all or some functions of the first communication apparatus. In FIG. 7 and the corresponding implementation, the second communication apparatus in S701 and S702 may be replaced with a chip, a chip system, or a processor that supports the second communication apparatus to implement the method, or may be replaced with a logic module or software that can implement all or some functions of the second communication apparatus.

S701: The first communication apparatus sends first data and third data, and correspondingly, the second communication apparatus receives the first data and the third data. Both the first data and the third data are obtained after first processing is performed on second data, where a signal power of the first data is different from a signal power of the third data, and/or a modulation order of the first data is different from a modulation order of the third data; and the first communication apparatus sends the first data and the third data.

S702: The second communication apparatus performs second processing corresponding to the first processing on the first data and the third data.

It should be noted that, for the technical solution shown in FIG. 7, refer to the descriptions of FIG. 2 and related technical solutions.

Based on the technical solution shown in FIG. 7, the first communication apparatus may send, in step S701, the first data and the third data that are obtained after the first processing is performed on the second data. The signal power of the first data is different from the signal power of the third data, and/or the modulation order of the first data is different from the modulation order of the third data. The second data is preconfigured, so that a receiver of the first data can obtain the first data and the third data, and then can optimize a data processing process in wireless communication based on the first data and the third data with different signal powers (and/or different modulation orders).

With reference to FIG. 8, an embodiment of this application provides a communication apparatus 800. The communication apparatus 800 can implement functions of the first communication apparatus or the second communication apparatus in the foregoing method embodiments, and therefore can achieve beneficial effects of the foregoing method embodiments. In an embodiment of this application, the communication apparatus 800 may be the first communication apparatus (or the second communication apparatus), or may be an integrated circuit, an element, or the like in the first communication apparatus (or the second communication apparatus), for example, a chip. In the following embodiments, an example in which the communication apparatus 800 is the first communication apparatus (or the second communication apparatus) is used for description.

It should be noted that a transceiver unit 802 may include a sending unit and a receiving unit that are respectively configured to perform sending and receiving.

In a possible implementation, when the apparatus 800 is configured to perform the method performed by the first communication apparatus in FIG. 3 and the related embodiments, the apparatus 800 includes a processing unit 801 and the transceiver unit 802. The processing unit 801 is configured to determine first data, where the first data is data obtained after first processing is performed on second data, and the second data is preconfigured. The transceiver unit 802 is configured to send the first data.

In a possible implementation, when the apparatus 800 is configured to perform the method performed by the second communication apparatus in FIG. 3 and the related embodiments, the apparatus 800 includes a processing unit 801 and the transceiver unit 802. The transceiver unit 802 is configured to receive first data, where the first data is data obtained after first processing is performed on second data, and the second data is preconfigured. The processing unit 801 is configured to perform second processing corresponding to the first processing on the first data.

In a possible implementation, when the apparatus 800 is configured to perform the method performed by the first communication apparatus in FIG. 7 and the related embodiments, the apparatus 800 includes a processing unit 801 and the transceiver unit 802. The processing unit 801 is configured to determine first data and third data, where both the first data and the third data are obtained after first processing is performed on second data, where a signal power of the first data is different from a signal power of the third data, and/or a modulation order of the first data is different from a modulation order of the third data. The transceiver unit 802 is configured to send the first data and the third data.

In a possible implementation, when the apparatus 800 is configured to perform the method performed by the second communication apparatus in FIG. 7 and the related embodiments, the apparatus 800 includes a processing unit 801 and the transceiver unit 802. The transceiver unit 802 is configured to determine to receive first data and third data, where both the first data and the third data are obtained after first processing is performed on second data, where a signal power of the first data is different from a signal power of the third data, and/or a modulation order of the first data is different from a modulation order of the third data. The processing unit 801 is configured to perform second processing corresponding to the first processing on the first data and the third data.

It should be noted that, for details about content such as information execution processes of the units of the communication apparatus 800, refer to the descriptions in the foregoing method embodiments of this application. Details are not described herein again.

FIG. 9 is a diagram of another structure of a communication apparatus 900 according to this application. The communication apparatus 900 includes a logic circuit 901 and an input/output interface 902. The communication apparatus 900 may be a chip or an integrated circuit.

The transceiver unit 802 shown in FIG. 8 may be a communication interface. The communication interface may be the input/output interface 902 in FIG. 9. The input/output interface 902 may include an input interface and an output interface. Alternatively, the communication interface may be a transceiver circuit, and the transceiver circuit may include an input interface circuit and an output interface circuit.

Optionally, the logic circuit 901 is configured to determine first data, where the first data is data obtained after first processing is performed on second data, and the second data is preconfigured; and the input/output interface 902 is configured to send the first data.

Optionally, the input/output interface 902 is configured to receive first data, where the first data is data obtained after first processing is performed on second data, and the second data is preconfigured; and the logic circuit 901 is configured to perform second processing corresponding to the first processing on the first data.

Optionally, the logic circuit 901 is configured to determine first data and third data, where both the first data and the third data are obtained after first processing is performed on second data, where a signal power of the first data is different from a signal power of the third data, and/or a modulation order of the first data is different from a modulation order of the third data; and the input/output interface 902 is configured to send the first data and the third data.

Optionally, the input/output interface 902 is configured to determine to receive first data and third data, where both the first data and the third data are obtained after first processing is performed on second data, where a signal power of the first data is different from a signal power of the third data, and/or a modulation order of the first data is different from a modulation order of the third data; and the logic circuit 901 is configured to perform second processing corresponding to the first processing on the first data and the third data.

The logic circuit 901 and the input/output interface 902 may further perform other steps performed by the first communication apparatus or the second communication apparatus in any embodiment, and achieve corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus. Some or all of functions of the processing apparatus may be implemented through software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated chips (application-specific integrated circuit, ASIC), systems on chips (system on chip, SoC), central processing units (central processing unit, CPU), network processors (network processor, NP), digital signal processing circuits (digital signal processor, DSP), microcontrollers (microcontroller unit, MCU), programmable controllers (programmable logic device, PLD), or other integrated chips, or any combination of the foregoing chips or processors.

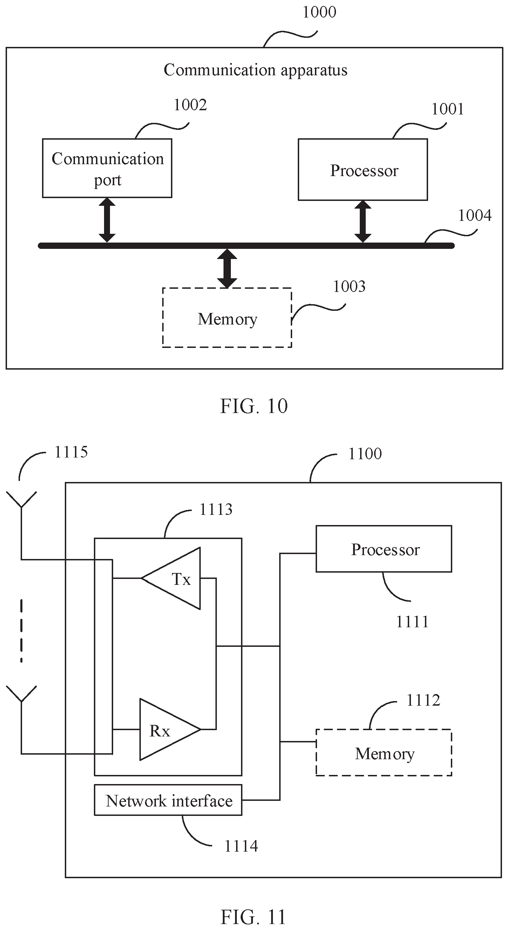

FIG. 10 shows a communication apparatus 1000 in the foregoing embodiments according to an embodiment of this application. The communication apparatus 1000 may be specifically the communication apparatus serving as the terminal device in the foregoing embodiments. In the example shown in FIG. 10, the terminal device is implemented by using a terminal device (or a component in a terminal device).

In a diagram of a possible logical structure of the communication apparatus 1000, the communication apparatus 1000 may include but is not limited to at least one processor 1001 and a communication port 1002.

The transceiver unit 802 shown in FIG. 8 may be a communication interface. The communication interface may be the communication port 1002 in FIG. 10. The communication port 1002 may include an input interface and an output interface. Alternatively, the communication port 1002 may be a transceiver circuit, and the transceiver circuit may include an input interface circuit and an output interface circuit.

Further, optionally, the apparatus may further include at least one of a memory 1003 and a bus 1004. In an embodiment of this application, the at least one processor 1001 is configured to control and process an action of the communication apparatus 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1000 shown in FIG. 10 may be specifically configured to implement the steps implemented by the terminal device in the foregoing method embodiments, and achieve the technical effects corresponding to the terminal device. For a specific implementation of the communication apparatus shown in FIG. 10, refer to the descriptions in the foregoing method embodiments. Details are not described herein again.

FIG. 11 is a diagram of a structure of a communication apparatus 1100 in the foregoing embodiments according to an embodiment of this application. The communication apparatus 1100 may be specifically the communication apparatus serving as the network device in the foregoing embodiments. In the example shown in FIG. 11, the network device is implemented by using a network device (or a component in a network device). For a structure of the communication apparatus, refer to the structure shown in FIG. 11.

The communication apparatus 1100 includes at least one processor 1111 and at least one network interface 1114. Further, optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In an embodiment of this application, the connection may include various interfaces, transmission lines, buses, or the like. This is not limited in embodiments. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 802 shown in FIG. 8 may be a communication interface. The communication interface may be the network interface 1114 in FIG. 11. The network interface 1114 may include an input interface and an output interface. Alternatively, the network interface 1114 may be a transceiver circuit, and the transceiver circuit may include an input interface circuit and an output interface circuit.

The processor 1111 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for performing the technical solutions in embodiments of this application, and execution of the program code is controlled by the processor 1111. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal to obtain the radio frequency signal. A sequence of the up frequency mixing and the digital-to-analog conversion is adjustable. The digital baseband signal and the digital intermediate frequency signal may be collectively referred to as a digital signal.

The transceiver 1113 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. The receiving unit may also be referred to as a receiver, an input interface, a receiving circuit, or the like. The sending unit may be referred to as a transmitter, a transmitter machine, a transmitting circuit, or the like.

It should be noted that the communication apparatus 1100 shown in FIG. 11 may be specifically configured to implement the steps implemented by the network device in the foregoing method embodiments, and achieve the technical effects corresponding to the network device. For a specific implementation of the communication apparatus 1100 shown in FIG. 11, refer to the descriptions in the foregoing method embodiments. Details are not described herein again.

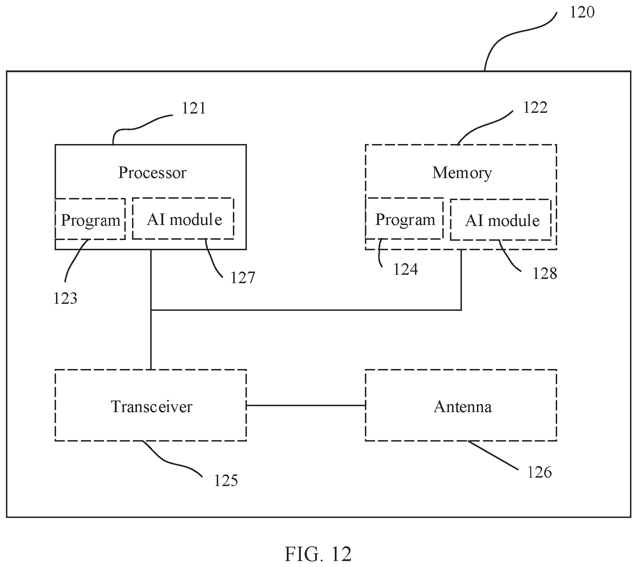

FIG. 12 is a diagram of a structure of a communication apparatus in the foregoing embodiments according to an embodiment of this application.

It may be understood that the communication apparatus 120 includes, for example, a module, a unit, an element, a circuit, or an interface, to be appropriately configured together to perform the technical solutions provided in this application. The communication apparatus 120 may be the terminal device or the network device described above, or may be a component (for example, a chip) in these devices, to implement the method described in the following method embodiments. The communication apparatus 120 includes one or more processors 121. The processor 121 may be a general-purpose processor, a dedicated processor, or the like, for example, may be a baseband processor or a central processing unit. The baseband processor may be configured to process a communication protocol and communication data. The central processing unit may be configured to: control the communication apparatus (such as a RAN node, a terminal, or a chip), execute a software program, and process data of the software program.

Optionally, in a design, the processor 121 may include a program 123 (which may also be referred to as code or instructions sometimes). The program 123 may be run on the processor 121, so that the communication apparatus 120 performs the method described in the foregoing embodiments. In still another possible design, the communication apparatus 120 includes a circuit (not shown in FIG. 12).

Optionally, the communication apparatus 120 may include one or more memories 122, storing a program 124 (which may also be referred to as code or instructions sometimes). The program 124 may be run on the processor 121, so that the communication apparatus 120 performs the method described in the foregoing method embodiments.

Optionally, the processor 121 and/or the memory 122 may include AI modules 127 and 128, and the AI module is configured to implement an AI-related function. The AI module may be implemented by software, hardware, or a combination of software and hardware. For example, the AI module may include a radio intelligence control (radio intelligence control, RIC) module. For example, the AI module may be near-real-time RIC or non-real-time RIC.

Optionally, the processor 121 and/or the memory 122 may further store data. The processor and the memory may be separately disposed, or may be integrated together.

Optionally, the communication apparatus 120 may further include a transceiver 125 and/or an antenna 126. The processor 121 sometimes may also be referred to as a processing unit, and controls a communication apparatus (for example, a RAN node or a terminal). The transceiver 125 sometimes may also be referred to as a transceiver unit, a transceiver machine, a transceiver circuit, or a transceiver, and is configured to implement a transceiver function of the communication apparatus through the antenna 126.

The transceiver unit 802 shown in FIG. 8 may be a communication interface. The communication interface may be the transceiver 125 in FIG. 12. The transceiver 125 may include an input interface and an output interface. Alternatively, the transceiver 125 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method according to the possible implementations of the first communication apparatus or the second communication apparatus in the foregoing embodiments.

An embodiment of this application further provides a computer program product (also referred to as a computer

## EP 4 757 391 A1

program). When the computer program product is executed by the processor, the processor performs the method in the possible implementations of the first communication apparatus or the second communication apparatus.

An embodiment of this application further provides a chip system. The chip system includes at least one processor configured to support a communication apparatus to implement the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus or the second communication apparatus in the foregoing method embodiments.

An embodiment of this application further provides a communication system. The network system architecture includes the first communication apparatus and the second communication apparatus in any one of the foregoing embodiments. The first communication apparatus may be a terminal device or a network device, and the second communication apparatus may also be a terminal device or a network device.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. If the integrated unit is implemented in a form of a software functional unit and is sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A communication method, comprising:

   determining first data, wherein the first data is data obtained after first processing is performed on second data, and the second data is preconfigured; and
   sending the first data.

2. The method according to claim 1, wherein the second data comprises a virtual encoded bit.

3. The method according to claim 2, wherein a bit number of the virtual encoded bit is associated with at least one of the following:
   a configured resource element RE number, a configured modulation order, and a configured stream number.

4. The method according to claim 2 or 3, wherein the virtual encoded bit is generated based on a first sequence, wherein

   the first sequence is a configured sequence; or
   the first sequence is a sequence determined based on a frame number of a configured time-domain resource and/or a configured stream number; or
   the first sequence is determined based on information about at least one of a configured time-domain resource, a configured frequency-domain resource, and a configured spatial-domain resource.

5. The method according to claim 1, wherein the second data comprises a virtual information bit.

6. The method according to claim 1, wherein the second data comprises a virtual modulated symbol.

7. The method according to claim 6, wherein a number of virtual modulated symbols is associated with at least one of a configured RE number and a configured stream number.

8. The method according to claim 6 or 7, wherein the virtual modulated symbol is a symbol determined based on a preset symbol sequence or a random sequence.

9. The method according to claim 1, wherein the second data comprises a virtual sent signal.

10. The method according to claim 9, wherein the sent signal is a random signal sequence, a preconfigured signal sequence, a constant-power signal, or a random signal.

11. The method according to any one of claims 1 to 10, wherein the first data and the second data are used for a first neural network, and the first neural network is associated with the first processing.

12. The method according to claim 11, wherein the first neural network comprises a neural network deployed in a first communication apparatus; and
that the first neural network is associated with the first processing comprises:
the neural network deployed in the first communication apparatus is used for the first processing, and the first processing comprises at least one of the following:
encoding, rate matching, scrambling, modulation, layer mapping, precoding, resource element RE mapping, digital beamforming BF, waveform generation, digital-to-analog conversion, and analog BF.

13. The method according to claim 12, wherein the method further comprises:
receiving indication information indicating a gradient of the first neural network.

14. The method according to any one of claims 11 to 13, wherein the first neural network comprises a neural network deployed in a second communication apparatus; and
that the first neural network is associated with the first processing comprises:
the neural network deployed in the second communication apparatus is used for second processing corresponding to the first processing, and the second processing comprises at least one of the following:
analog BF, analog-to-digital conversion, waveform reception, digital BF, RE demapping, channel equalization, layer demapping, demodulation, descrambling, de-rate matching, and decoding.

15. The method according to any one of claims 1 to 14, wherein the method further comprises:

sending third data, wherein the third data is data obtained after the first processing is performed on the second data, wherein
a signal power of the first data is different from a signal power of the third data, and/or a modulation order of the first data is different from a modulation order of the third data.

16. The method according to claim 15, wherein a time-frequency resource carrying the first data and a time-frequency resource carrying the third data are located in a configured first time-frequency resource.

17. A communication method, comprising:

receiving first data, wherein the first data is data obtained after first processing is performed on second data, and the second data is preconfigured; and
performing second processing corresponding to the first processing on the first data.

18. The method according to claim 17, wherein the second data comprises a virtual encoded bit.

19. The method according to claim 18, wherein a bit number of the virtual encoded bit is associated with at least one of the following:
a configured RE number, a configured modulation order, and a configured stream number.

20. The method according to claim 18 or 19, wherein the virtual encoded bit is generated based on a first sequence, wherein

   the first sequence is a configured sequence; or
   the first sequence is a sequence determined based on a frame number of a configured time-domain resource and/or a configured stream number; or
   the first sequence is determined based on information about at least one of a configured time-domain resource, a configured frequency-domain resource, and a configured spatial-domain resource.

21. The method according to claim 17, wherein the second data comprises a virtual information bit.

22. The method according to claim 17, wherein the second data comprises a virtual modulated symbol.

23. The method according to claim 22, wherein a number of virtual modulated symbols is associated with at least one of a configured RE number and a configured stream number.

24. The method according to claim 22 or 23, wherein the virtual modulated symbol is a symbol determined based on a preset symbol sequence or a random sequence.

25. The method according to claim 17, wherein the second data comprises a virtual sent signal.

26. The method according to claim 25, wherein the sent signal is a random signal sequence, a preconfigured signal sequence, a constant-power signal, or a random signal.

27. The method according to any one of claims 17 to 26, wherein the first data and the second data are used for a first neural network, and the first neural network is associated with the first processing.

28. The method according to claim 27, wherein the first neural network comprises a neural network deployed in a first communication apparatus; and
that the first neural network is associated with the first processing comprises:
the neural network deployed in the first communication apparatus is used for the first processing, and the first processing comprises at least one of the following:
encoding, rate matching, scrambling, modulation, layer mapping, precoding, resource element RE mapping, digital beamforming BF, waveform generation, digital-to-analog conversion, and analog BF.

29. The method according to claim 28, wherein the method further comprises:
sending indication information indicating a gradient of the first neural network.

30. The method according to claim 27, wherein the first neural network comprises a neural network deployed in a second communication apparatus; and
that the first neural network is associated with the first processing comprises:
the neural network deployed in the second communication apparatus is used for second processing corresponding to the first processing, and the second processing comprises at least one of the following:
analog BF, analog-to-digital conversion, waveform reception, digital BF, RE demapping, channel equalization, layer demapping, demodulation, descrambling, de-rate matching, and decoding.

31. The method according to any one of claims 17 to 30, wherein the method further comprises:

   receiving third data, wherein the third data is data obtained after the first processing is performed on the second data, wherein
   a signal power of the first data is different from a signal power of the third data, and/or a modulation order of the first data is different from a modulation order of the third data.

32. The method according to claim 31, wherein a time-frequency resource carrying the first data and a time-frequency resource carrying the third data are located in a configured first time-frequency resource.

33. A communication apparatus, comprising a module configured to perform the method according to any one of claims 1 to 32.

34. A communication apparatus, comprising at least one processor, wherein the at least one processor is coupled to a memory, and the at least one processor is configured to perform the method according to any one of claims 1 to 32.

35. The communication apparatus according to claim 34, wherein the communication apparatus is a chip or a chip system.

36. A readable storage medium, wherein the storage medium stores a computer program or instructions, and when the computer program or instructions are executed by a communication apparatus, the method according to any one of claims 1 to 32 is implemented.

37. A computer program product, comprising instructions, wherein when the instructions are run on a computer, the computer is enabled to perform the method according to any one of claims 1 to 32.

Network device

Terminal device 1

Terminal device 2

Terminal device 3

Terminal device 5

Terminal device 6

Terminal device 4

FIG. 1a

Base station

Terminal
device

Terminal
device

FIG. 1b

Television

Mobile
phone

FIG. 1c

| Second communication apparatus | First communication apparatus |
|---|---|

S201: First data

S202: Perform second processing corresponding to first processing on the first data

FIG. 2

Signal sending process

Signal receiving process

| Encoding |
| Rate matching |
| Scrambling |
| Modulation |
| Layer mapping |
| Precoding |
| RE mapping |
| Digital BF |
| Waveform generation |
| DA |
| Analog BF |

| Decoding |
| De-rate matching |
| Descrambling |
| Demodulation |
| Layer demapping |
| Channel equalization |
| RE demapping |
| Digital BF |
| Waveform reception |
| AD |
| Analog BF |

FIG. 3

Virtual encoded bit

| Channel encoding/ interleaving | → | AE-NN | → | Mapping | → | Waveform | → | T-NN | →

FIG. 4a

Virtual modulated symbol

| Channel encoding/ interleaving | → | Modulation | → | Mapping | → | Waveform | → | T-NN | →

FIG. 4b

Virtual sent signal

| Channel encoding/ interleaving | → | Modulation | → | Mapping | → | Waveform | → | T-NN | →

FIG. 4c

| Power 1 | | Power 2 |
| Power 3 | | Power 4 |

f

t

FIG. 5a

Signal generation

MS

Resource

QAM

Mapping

p0

Mapping

p1

FIG. 5b

f

Mod-4

Mod-6

t

FIG. 6a

Signal generation

CS

MS

Bit

Channel encoding/
interleaving

q0

AE-NN

AE-NN

q1

FIG. 6b

Second communication apparatus

First communication apparatus

S701: First data and third data

S302: Perform second processing corresponding to first processing on the first data and the third data

**FIG. 7**

800

Communication apparatus

801

Processing unit

802

Transceiver unit

**FIG. 8**

900

Communication apparatus

901

Logic circuit

902

Input/Output interface

**FIG. 9**

1000

Communication apparatus

1002

Communication port

1001

Processor

1004

1003

Memory

FIG. 10

1115

1100

1113

Tx

Processor

1111

Rx

1112

Memory

Network interface

1114

FIG. 11

FIG. 12

## INTERNATIONAL SEARCH REPORT

| International application No. |
|---|
| **PCT/CN2023/117032** |

| A. | CLASSIFICATION OF SUBJECT MATTER |
|---|---|

H04W24/06(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, VCN, DWPI, CNKI, IEEE: 预配置, 比特, 编码, 调制, 机器学习, 神经网络, 发送, 接收, preconfigur+, pre-configur +, bit, encod+, modulat+, ML, neural, network

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114337911 A (HUAWEI TECHNOLOGIES CO., LTD.) 12 April 2022 (2022-04-12) claims 28 and 39-42, and description, paragraphs 0318-0366 and 0616 | 1-37 |
| X | US 2018322388 A1 (VIRGINIA TECH INTELLECTUAL PROPERTIES, INC.) 08 November 2018 (2018-11-08) claims 1-30, and description, paragraphs 0094-0100 | 1-37 |
| A | CN 114422380 A (VIVO MOBILE COMMUNICATION CO., LTD.) 29 April 2022 (2022-04-29) entire document | 1-37 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 May 2024** | **21 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 114337911 | A | 12 April 2022 | WO | 2022068757 | A1 | 07 April 2022 |
| | | | | EP | 4210252 | A1 | 12 July 2023 |
| | | | | US | 2023299872 | A1 | 21 September 2023 |
| US | 2018322388 | A1 | 08 November 2018 | JP | 2020520497 | A | 09 July 2020 |
| | | | | WO | 2018204632 | A1 | 08 November 2018 |
| | | | | EP | 3619656 | A1 | 11 March 2020 |
| | | | | KR | 20200004340 | A | 13 January 2020 |
| | | | | US | 2019188565 | A1 | 20 June 2019 |
| | | | | US | 2023055213 | A1 | 23 February 2023 |
| | | | | CN | 111512323 | A | 07 August 2020 |
| CN | 114422380 | A | 29 April 2022 | WO | 2022073496 | A1 | 14 April 2022 |
| | | | | US | 2023244911 | A1 | 03 August 2023 |
| | | | | EP | 4228217 | A1 | 16 August 2023 |
| | | | | IN | 202317025456 | A | 24 November 2023 |

INTERNATIONAL SEARCH REPORT
Information on patent family members

International application No.

**PCT/CN2023/117032**

Form PCT/ISA/210 (patent family annex) (July 2022)